# EUROPEAN PATENT SPECIFICATION

(11) **EP 3 289 512 B1**
(45) Date of publication and mention of the grant of the patent: **26.06.2019**
(21) Application number: 16721947.6
(22) Date of filing: 29.04.2016
(51) Int. Cl.: G06F 21/55, G06F 21/56, G06F 21/57

(54) **PROCESS CATEGORIZATION FOR COMPUTER SECURITY**
PROZESSKATEGORISIERUNG FÜR COMPUTERSICHERHEIT
CATÉGORISATION DE PROCESSUS POUR LA SÉCURITÉ INFORMATIQUE

(30) Priority: 04.06.2015 US 201562171072 P; 04.06.2015 US 201562171142 P; 05.06.2015 US 201562171887 P; 28.08.2015 US 201514838634; 28.08.2015 US 201514838712; 28.08.2015 US 201514838855
(43) Date of publication of application: 07.03.2018
(73) Proprietor: Accenture Global Services Limited, Dublin 4 (IE)
(72) Inventor: MULCHANDANI, Shaan, Arlington, Virginia 22209 (US)
(74) Representative: Harrison, Scott David
(86) International application number: PCT/IB2016/052463
(87) International publication number: WO 2016/193831

(56) References cited:
- US-A1- 2009 328 209
- US-A1- 2015 101 049
- US-B1- 8 171 545

## Description

### CROSS-REFERENCE TO RELATED APPLICATION

This application claims the benefit of U.S. Provisional Application No. 62/171,072, filed June 4, 2015, the benefit of U.S. Provisional Patent Application No. 62/171,142, filed June 4, 2015, the benefit of U.S. Provisional Application No. 62/171,887, filed June 5, 2015, the benefit of U.S. Application No. 14/838,634, filed August 28, 2015, the benefit of U.S. Patent Application No. 14/838,855, filed August 28, 2015, and the benefit of U.S. Application No. 14/838,712, filed August 28, 2015.

### TECHNICAL FIELD

This disclosure generally describes techniques relating to computer security.

### BACKGROUND

Computers may execute malicious processes that consume resources. For example, malicious processes may use main memory, processing power, or disk space of computers. The consumption of resources by malicious processes may make those resources unavailable for use by non-malicious processes, negatively impacting execution of non-malicious processes.

US 8,171,585 B1 discloses an anomalous process behavior manager which uses statistical information concerning running processes to detect and manage process behavioral anomalies. The anomalous process behavior manager collects per process statistical data over time, such as resource allocation statistics and user interaction statistics. Current collected statistical data is analyzed against corresponding historical statistical data to determine whether processes are behaving in expected ways relative to past performance. Appropriate corrective steps are taken when it is determined that a process is behaving anomalously.

### SUMMARY

To identify malicious processes, a computing device may collect and analyze data from multiple different client devices that are each running multiple processes. The client devices may be any type of device that can execute a process and may be devices that are managed by a single entity such as a corporate IT department. Upon execution of different processes, each client device identifies the resources requested by and allocated to a process. Before or during execution, each client device may also prompt a user for input regarding whether the process is safe to execute or not. Each client device provides the user input data, the resource allocation data, and data specifying the configuration of the client device, to a central computing device. The central computing device calculates, based on the user input data, the resource allocation data, and the configuration data, a risk score for each process. The risk score indicates a likelihood that a process is a malicious process. The central computing device uses the risk scores to identify a subset of processes, such as the processes with the highest risk scores. The central computing device performs additional processing on the subset of processes and adjusts the risk scores depending on whether the central computing device determines that a process is more likely or less likely to be malicious than what the risk score reflects. The additional processing may include executing the process, installing the process, or analyzing the code of the process. Once the central computing device adjusts the risk scores, the device compares the risk scores to a threshold and populates a whitelist and a blacklist. The central computing device provides the whitelist and blacklist to the client devices.

In some aspects, the subject matter described in this specification may be embodied in methods that may include the actions of receiving, from each of one or more client devices, data indicating resources allocated upon execution of each of one or more processes; receiving, from each of the one or more client devices, data indicating a configuration of the client device; receiving, from each of the one or more client devices, data indicating a user selection whether to execute each of the one or more processes; based on the resources allocated upon execution of each of the one or more processes, the configuration of each client device, and the user selections, determining, for each of the one or more processes, a risk score that reflects a likelihood that the process is a malicious process; based on the risk score, identifying a particular process; performing additional processing on the particular process; and based on the additional processing, determining an updated risk score for the particular process.

In another aspect, a method may include one or more of the operations described above. In yet another aspect, a computer-readable storage medium may be operable to cause a processor to perform one or more of the operations described above.

Implementations may include one or more of the following features. For example, the resources allocated upon execution of each of the one or more processes include an amount of memory; an amount of processor time; an amount of power; and network connections. The configuration of the client device includes a type and speed of each processor; a type and size of memory; a type and size of a hard drive; networking devices; and output devices. The action of determining, for each of the one or more processes, the risk score includes based on the configuration of the client device, determining resources that are available for allocation upon execution of the process; and determining the risk score based on a ratio of an amount of the resources allocated upon execution of the process to an amount of the resources that are available for allocation upon execution of the process. The action of determining, for each of the one or more processes, the risk score includes determining a number of the one or more client devices from which the data indicating the resources allocated upon execution of each of one or more processes is received; and determining the risk score based on the number of the one or more client devices from which the data indicating the resources allocated upon execution of each of one or more processes is received. The action of performing additional processing on the particular process includes executing the particular process; after executing the particular process, determining an amount of resources requested by the particular process; and terminating the particular process.

The actions further include determining that the updated risk score satisfies a threshold; based on determining that the updated risk score satisfies the threshold, adding the particular process to a blacklist; and providing, to each of the one or more client devices, the blacklist. The actions further include determining that the updated risk score does not satisfy a first threshold; determining that the updated risk score satisfies a second threshold based on determining that the updated risk score does not satisfy the first threshold and does satisfy a second threshold, adding the particular process to a whitelist; and providing, to each of the one or more client devices, the whitelist. The action of identifying the particular process includes identifying a process with a highest risk score. The actions further include receiving, from each of the one or more client devices, data indicating resources that are available for allocation upon execution of each of the one or more processes. The one or more client devices are comprised of client devices in one enterprise.

In another aspect, a system may identify processes executing on the system. For each identified process, the system may determine the likelihood that the process is a malicious process based on one or more of the process' characteristics. The system may then generate a resource allocation priority based on the likelihoods that the processes are malicious process. The resource allocation priority may then be used by the system to allocate resources to the processes. Accordingly, the system may prioritize allocating resources to processes less likely to be malicious processes over processes more likely to be malicious processes, and may prohibit allocation of resources to processes deemed likely malicious in the event of resource scarcity.

In some aspects, the subject matter described in this specification may be embodied in methods that may include the actions of receiving a request from a process executing on a system for an allocation of resources, identifying other processes executing on the system, determining, for each of the processes, a risk score that reflects a likelihood that the process is a malicious process, determining a resource allocation priority based on the risk scores of each of the processes, and allocating resources to the processes based on the resource allocation priority.

Other versions include corresponding systems, apparatus, and computer programs, configured to perform the actions of the methods, encoded on computer storage devices.

These and other versions may each optionally include one or more of the following features. For instance, in some implementations allocating resources to the processes based on the resource allocation priority includes determining an availability of resources on the system and allocating the resources to the processes based on the availability of resources on the system and the resource allocation priority.

In certain aspects, allocating the resources to the processes based on the availability of resources on the system and the resource allocation priority includes determining that the availability of resources on the system is insufficient to fulfill the request and maintain an allocation of resources for the other processes, in response to determining that the availability of resources on the system is insufficient to fulfill the request and maintain an allocation of resources for the other processes, determining that the resource allocation priority indicates that the process has a lower priority than the other processes, and in response to determining that the resource allocation priority indicates that the process has a lower priority than the other processes, rejecting or queueing the request from the process.

In some aspects, allocating the resources to the processes based on the availability of resources on the system and the resource allocation priority includes determining that the availability of resources on the system is insufficient to fulfill the request and maintain an allocation of resources for the other processes, in response to determining that the availability of resources on the system is insufficient to fulfill the request and maintain an allocation of resources for the other processes, determining that the resource allocation priority indicates that the process has a higher priority than another process, in response to determining that the resource allocation priority indicates that the process has a higher priority than another process, determining whether reducing a resource allocation of the other process enables the system to fulfill the request from the process. Additional actions include, in response to determining that reducing the resource allocation of the other process enables the system to fulfill the request from the process without causing integrity or security concerns, reducing the resource allocation of the other process and fulfilling the request from the process. In some implementations, reducing the resource allocation of the other process includes suspending or securely terminating the other process.

In certain aspects, determining a resource allocation priority based on the risk scores of each of the processes includes determining a resource allocation priority that prioritizes resource allocation for processes with risk scores that reflect a low likelihood that the process is a malicious process over processes with risk scores that reflect a high likelihood that the process is a malicious process.

In some aspects, determining a resource allocation priority based on the risk scores of each of the processes includes classifying the processes into clusters based on the risk scores and determining the resource allocation priority based on the clusters.

In another aspect, systems and methods are configured for determining and classifying risks that are posed by computer processes. For example, potential risks that are posed by computer processes can be assessed and quantified based on a variety of factors, such process signatures, process dependencies, and/or computer resource usage (e.g., CPU use, memory use, network traffic). Process risks can additionally and/or alternatively be determined based on changes related to processes over time, such as changes in process signatures, changes process dependencies, and/or changes in resource usage. Risk scores can be generated dynamically for processes, such as when processes are instantiated and/or during runtime.

In one implementation, a computer-implemented method includes receiving, at a process risk classifier running on a computer system, a request to determine a risk level for a particular process; accessing, by the process risk classifier, one or more signatures for the particular process that provide one or more snapshots of characteristics of the particular process at one or more previous times; identifying, by the process risk classifier, one or more differences between the particular process in its current form and the one or more signatures for the particular process; accessing, by the process risk classifier, information identifying previous usage of the computer system's resources by the particular process; determining, by the process risk classifier, a current risk score for the particular process based, at least in part, on (i) the one or more signatures for the particular process, (ii) the one or more differences between the particular process in its current form and the one or more signatures, and (iii) the previous usage of the resources; and providing, by the process risk classifier, the current risk score for the particular process.

Such a computer-implemented method can optionally include one or more of the following features. The computer-implemented method can further include obtaining, at the process risk classifier, information that identifies current usage of the computer system's resources by the particular process; and comparing, by the computer system, the current usage of the resources with the previous usage of the resources. The current risk score can be determined further based, at least in part, on the current usage of the resources and the comparison of the current usage with the previous usage of the resources. The request can be received during runtime of the particular process on the computer system from a process manager that is programmed to manage process risk for processes running on the computer system.

The request can include information that identifies requested usage of the computer system's resources by the particular process. The method can further include comparing, by the computer system, the requested usage of the resources with the previous usage of the resources. The current risk score can be determined further based, at least in part, on the requested usage of the resources and the comparison of the requested usage with the previous usage of the resources. The request can be received in response to the particular process requesting permission to run on the computer system. The request can be received in response to the particular process requesting additional resources during runtime.

The computer-implemented method can further include receiving, at the process risk classifier, an indication that the process is newly installed on the computer; determining, by the process risk classifier, an initial signature for the process following installation; and storing, by the process risk classifier, the initial signature in association with the process. The one or more signatures can include the initial signature. The computer-implemented method can further include determining, in response to the request, a second signature for the process; and storing, by the process risk classifier, the second signature, and the deviation between the first and second signatures, in association with the process. The one or more signatures can further include the second signature.

The computer-implemented method can further include accessing, by the process risk classifier, one or more dependency maps for the particular process that identify one or more dependencies for the particular process. The current risk score can be further determined based on the one or more dependencies for the particular process. The one or more dependency maps can include a tree data structure that represents process dependencies for the particular process and other processes installed on computer system. The tree data structure can be a B+ tree. The current risk score can be determined based on which of one or more paths from the tree data structure.

The particular process can be one of a plurality of processes that includes an application installed on the computer system. The particular process can be an application installed on the computer system. The previous usage of the resources can correspond to previous usage of one or more processors for the computer system by the particular process. The previous usage of the resources can correspond to previous usage of memory for the computer system by the particular process. The previous usage of the resources can correspond to previous network traffic on the computer system by the particular process. The previous usage of the resources can correspond to previous energy consumption on the computer system by the particular process. The previous usage of the resources can correspond to previous processing threads on the computer system by the particular process.

In another implementation, a computer system includes one or more processors; one or more storage devices; a particular process including one or more executable files stored in the one or more storage devices, the one or more executable files being programmed to be executed by the one or more processors; and a process risk classifier that is programmed to: receive a request to determine a risk level for the particular process, access one or more signatures for the particular process that provide one or more snapshots of characteristics of the particular process at one or more previous times, identify one or more differences between the particular process in its current form and the one or more signatures for the particular process, access information identifying previous usage of the computer system's resources by the particular process, determine a current risk score for the particular process based, at least in part, on (i) the one or more signatures for the particular process, (ii) the one or more differences between the particular process in its current form and the one or more signatures, and (iii) the previous usage of the resources, and provide the current risk score for the particular process.

Certain implementations may provide one or more advantages. For example, process risks can be more accurately and efficiently determined, which can improve overall system performance. In another example, by using multiple different factors process risks can be assessed in a more dynamic and robust manner, which can improve overall computer security. For instance, risks can be accurately assessed without relying on, for example, enumerated lists of potentially risky processes.

The details of one or more implementations of the subject matter described in this specification are set forth in the accompanying drawings and the description below. Other potential features, aspects, and advantages of the subject matter will become apparent from the description, the drawings, and the claims.

### BRIEF DESCRIPTION OF DRAWINGS

FIG. 1 illustrates an example system for process categorization using crowdsourcing.
FIG. 2 is a flowchart of an example process for process categorization using crowdsourcing.
FIG. 3 is a schematic diagram of an example computer system.
FIGs. 4A-C are block diagrams of example systems for allocating resources to processes based on security risk.
FIG. 5 is a flowchart of an example process for allocating resources to processes based on security risk.
FIGS. 6A-B is a conceptual diagram of an example computer system for determining process risks.
FIG. 7 depicts an example computer system for assessing process risk.
FIGS. 8A-B are flowcharts of an example technique for assessing risks posed by computer processes.
FIG. 9 illustrates a schematic diagram of an exemplary generic computer system.

Like reference symbols in the various drawings indicate like elements.

### DETAILED DESCRIPTION

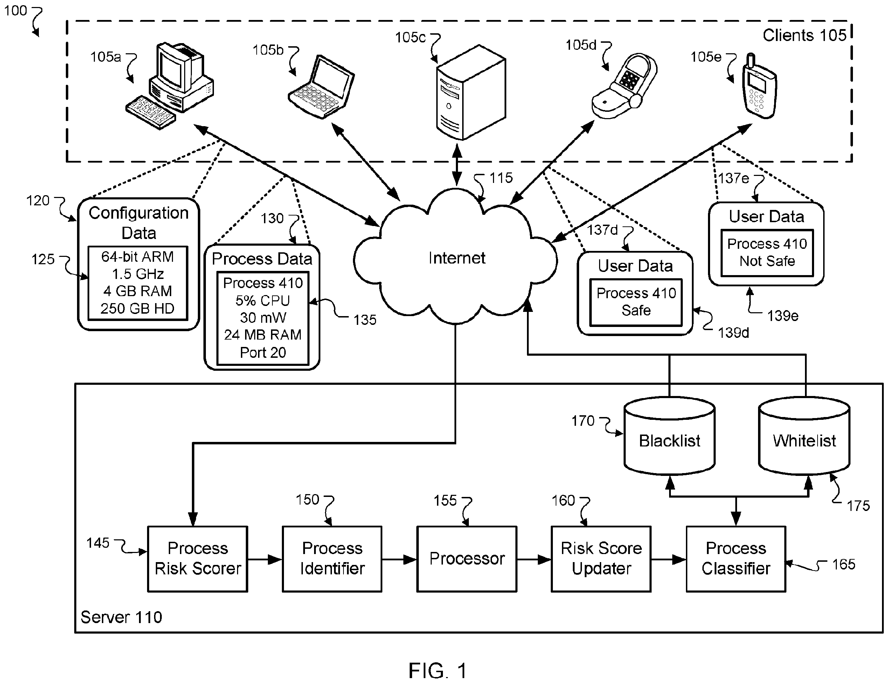

FIG. 1 illustrates an example system 100 for process categorization using crowdsourcing. Briefly, and as described in further detail below, the client devices 105 provide data related to the execution on the client devices 105 of one or more processes. The server 110 receives the data related to the process execution and identifies malicious processes and non-malicious processes. The server 110 provides a list of the malicious and non-malicious processes back to the client devices 105.

In the example shown in FIG. 1, system 100 includes client devices 105 that communicate with the server 110. The client devices 105 may include any type of computing device. For example, the client device 105 may include desktop computers 105a and 105c, a laptop 105b, or mobile phones 105d and 105e. Additionally, the client devices 105 may include tablets, watches, or appliances. In some implementations, the client devices 105 are managed by a single entity such as a corporate information technology department or another type of enterprise. The corporate IT department may monitor the activities performed, install software on the client devices 105, or control the applications that a user installs or executes on the device. The client devices 105 may communicate with the server 110 through the internet 115 or through a local area network.

Each client device provides to the server the configuration data 120 of the device. The configuration data 120 may include the type of device, the model of the device, the type of CPU including the speed, number of cores, and cache size, the amount of RAM, the size of the hard drive, and the operating system. For example, client device 105a may provide data 125 to the server 110 indicating that the client device 105a includes a 64-bit ARM processor running at 1.5 GHz, 4 GB of RAM, a 250 GB hard drive, and is running Desktop OS.

Each client device provides process data 130 to the server 110. The client devices 105 may execute processes when a user opens an application. For example, a user may open a browser and the client device 105b executes the main browser process and two helper processes. The client device 105 may execute a process upon boot up, such as an operating system process. The client devices 105 may provide the process data 130 upon execution or installation of a process, after a period of time after execution or installation, at a predetermined time, or upon request by the server. The process data 130 may include, for each process, data related to CPU usage, memory usage, network packet inflow and outflow, power consumption, the owner of the process, the namespace the process was executed under, runtime, parent processes, child processes, processes that may be dependent on the process, or processes that are dependent on the process. For example, the client device 105a may provide data 135 to the server 110 indicating that the client device 105a executed process 410 and that processes 410 requested five percent of the CPU, twenty-four megabytes of RAM, and to send data on port 20, and consumed thirty milliwatts of power.

Each client device also provides user selection data to the server 110, as available. Upon execution or installation of a process, a client device may prompt a user of the client device whether or not to run the process. For example, the client device 105d may attempt to execute process 410 and prompt the user as to the safety of process 410. The user may select that the process 410 is safe. The client device 105d may then provide, to the server 110, user data 137d that includes data 139e indicating that the process 410 is safe. As another example, the client device 105e may attempt to execute process 410 and prompt the user as to the safety of process 410. The user may select that the process 410 is not safe. The client device 105e may then provide, to the server 110, user data 137e that includes data 139e indicating that the process 410 is not safe.

The process risk scorer 145 may determine risk scores for processes executing on the client devices 105. For example, the process risk scorer 145 may determine a first risk score for a first process executing on the client device 105b and a second risk score for a second process executing on the client device 105d. A risk score of a process may reflect a likelihood that the process is a malicious process. For example, an integral process of an operating system may have a risk score of 0% that reflects that the process has no likelihood of being a malicious process. In another example, a process that has never been seen before may have a risk score of 50% that reflects a moderate likelihood that the process is a malicious process. In yet another example, a known malicious process may have a risk score of 100% that reflects a high likelihood that the process is a malicious process.

The process risk scorer 145 may determine risk scores for each of the processes. For example, the process risk scorer 145 may determine a risk score for process 410 executing on client device 105a as well as client device 105e and for other processes executing on other client devices. The process risk scorer 145 may determine the risk score for a process based on comparing the process with previously scored processes. For example, the process risk scorer 145 may determine a name of a process executing on the client device 105b matches the name of a process stored in a table mapping process names to risk scores, and determine the risk score of the process executing on the client device 105b is the risk score in the table for the matching process name. In another example, the process risk scorer 145 may determine a hash of a process executing on the client device 105e matches the hash of a process stored in a table mapping hashes to risk scores, and determine the risk score of the process executing on the client device 105e is the risk score in the table for the matching hash.

In another example, the process risk scorer 145 may calculate a risk score for the processes based on characteristics of the process. For example, the process risk scorer 145 may calculate a risk score for a process based on memory usage of the process, read and write activity of the process, frequency of execution of the process, and other characteristics of the process.

In yet another example, the process risk scorer 145 may calculate a risk score for the process based on the feedback 137d and 137e received from users. For example, upon execution of process 410, the client device 105a may prompt the user as to whether or not to run the process. The user may select that the process 410 is safe to run or that the process 410 should not run. This selection along with the selections of other users of other client devices 105 regarding the execution of process 410 may be used to score the process 410. More users indicating that the process 410 is not safe to run will increase the risk score for processor 410, or more users indicating that the process 410 is safe to run will decrease the risk score for process 410.

In another example, the process risk scorer 145 may calculate a risk score for the process based on a number of client devices that attempt to execute the process. For example, a process that executes frequently may have a higher likelihood of being a malicious process. The process risk scorer 145 may maintain a list of common system processes that execute frequently. If a process executes as frequently as those system processes but the process risk scorer 145 does not match the process as a system process, then the processes risk scorer 145 may increase the risk score.

In some implementations, the data received from the client devices 105 is anonymized. The anonymized data prevents the sever 110 from associating a particular user with the data 120, 130, 137d or 137e. In some implementations, the client devices 105 remove any user identifying data before providing the data to the sever 110. In some implementations, the client devices 105 encrypt the user identifying data before providing the data to the server 110.

The process risk scorer 145 provides the list of processes and corresponding risk scores to the processes identifier 150. The process identifier 150 identifies processes for additional processing by the server 110. The process identifier 150 may identify the processes with the highest risk scores. For example, the process identifier 150 may identify the processes with the risk scores in the highest ten percent. The processes with the highest risk scores may be most likely to be malicious processes and by evaluating the processes again, the server 110 may increase a confidence of the risk scores. In some implementations, the process identifier 150 may identify the processes with the lowest risk scores. For example, the processes identifier 150 may identify the processes with the risk scores in the lowest five percent. The processes with the lowest risk scores may be least likely to be malicious processes and by evaluating the processes again, the server 110 may increase a confidence of the risk scores.

The process identifier 150 provides the identified process data to the processor 155. The processor 155 performs additional processing on the identified processes. The additional processing may include executing the process again in an isolated/quarantined/sandboxed environment or executing the process and quickly terminating the process. The processor 155 may execute a process and allow the process to request resources. Once the processor 155 receives a request from the process for resources, then the processor 155 will terminate the process. The processor 155 may also allow the process to run for a predetermined period of time. The processor 155 may monitor the resources requested by the process while the process runs. The processor 155 may allow the process to run until the process has completed executing and monitor the resources requested by the process during run time. In some implementations, the processor 155 may install the process. The processor 155 may allow the installation of the process to complete and monitor the resources requested during installation. The processor 155 may allow the process to being installation and request an initial allocation of resources and monitor the resources requested at the beginning of installation.

The processor 155 provides the additional data related to running the process to the risk score updater 160. The risk score updater 160 factors in the additional data related to running the process in calculating an updated risk score for the process. The risk score updater 160 may leave the risk score unchanged if the additional data from the processor 155 generally matches process data received from the client devices 105. The risk score updater 160 may increase the risk score if the additional data from the processor 155 suggests an increased likelihood that the process is a malicious process. The risk score updater 160 may decrease the risk score if the additional data from the processor 155 suggests a decreased likelihood that the process is a malicious process.

In some implementations, the risk score updater 160 may consider the configuration of the server 110 in calculating an updated risk score. For example, if the server 110 has 16 GB of RAM and the processes requests 10 MB of RAM, the server may compare that to the process to requesting 10 MB of RAM on client devices that include 1 GB of RAM. The risk score updater 160 may decrease the risk score because running the process on the server 110 suggest that the process does not request an amount of RAM that may negatively impact a device. As another example, if the server 110 has 8 GB of RAM and the processes requests 1 GB of RAM, the server may compare that to the process requesting 100 MB from a client device with 1 GB of RAM. The risk score updater 160 may increase the risk score because running the process on the server 110 suggests that the process requests an equal amount of RAM that may negatively impact devices with higher amounts of RAM that may be running more processes than devices with smaller amount of RAM.

In some implementations, the risk score updater 160 may consider input from another user. The user may observe the server executing the process and determine whether the process is safe or not safe. The risk score updater 160 may use the user's answer as a factor in updating the risk score. For example, the risk score updater 160 may increase the risk score by five percent or a predetermined, weighted percent if the user of the server indicates that the process is safe. The risk score updater 160 may decrease the risk score by five percent or a predetermined, weighted percent if the user of the server indicates that the process is not safe. In some implementations, the server user's indication of whether the process is safe or not is given more weight by the risk score updater 160 than users of the client devices 105 when updating the risk score.

The risk score updater 160 provides the updates risk scores to the process classifier 165. The process classifier 165 compares the risk score for each process to a threshold and based on that comparison adds the process to the blacklist 170 or the whitelist 175. The blacklist 170 includes data identifying processes that should not be run by a device, and the whitelist 175 includes data identifying processes that may be run by a device. As an example performed by the process classifier 165, the process classifier 165 may receive a risk score of 85 for process 410 and compare that risk score to a threshold of 80. Because the risk score of 85 is higher than the threshold score of 80, the processor classifier 165 may add the process 410 to the blacklist 170. As another example, the process classifier 165 may receive a risk score of 20 for process 443 and compare that risk score to the threshold of 80. Because the risk score of 20 is lower than the risk threshold of 80, the process classifier 165 may add the process 443 to the whitelist 175. In instances where the risk score is equal to the threshold, the process classifier 165 may use one or more tie breaking procedures. The process classifier 165 may add the process to the whitelist 175 if the server user determined that the process is safe. The process classifier 165 may add the process to the blacklist if the server user determined that the process is not safe. In instances where the server 110 receives data from client devices that are trusted, such as those administered by a corporate IT department, and client devices that are not trusted, such as those not administer by the corporate IT department, the process classifier 165 may weigh the data received from the trusted devices more than the untrusted devices.

In some implementations, the process classifier 165 compares the risk score for each process to two or more thresholds. If the risk score does not satisfy any of the two or more thresholds, then the process remains unclassified and may be submitted for further processing. If the risk score satisfies at least one of the thresholds, then the process may be added to the whitelist 175 or the blacklist 170. For example, if the risk score is 50, the blacklist threshold is 80, and the whitelist threshold is 20, then the process may remain unclassified. If the risk score is 90, then the process is added to the blacklist 170. If the risk score is 10, then the process is added to the whitelist 175.

The risk score updater 160 may not update the risk scores for the processes not identified by the process identifier 150. In this instance, the process classifier 165 may add the processes that the process identifier 150 did not identify to the whitelist 175 and the blacklist 170 by comparing the risk score calculated by the process risk scorer 145 to the risk score threshold. For example, the process risk scorer 145 may calculate that the risk score for process 512 is 50. With that risk score, the process identifier 150 does not identify the process 512 as one for further processing. The process classifier may compare the risk score of 50 to the risk threshold of 80 and add the process 512 to the whitelist 175.

The risk score updater 160 may provide feedback to the process risk scorer 145. The feedback may indicate to the processes risk scorer 145 to adjust the calculation used to determine risk scores. The feedback may be based on the percentage of the risk scores that the risk score updater 160 updates. For example, if the risk score updater 160 updates the risk scores of eighty percent of the identified processes by adding an average of three points, then the risk score updater 160 may indicate to the process risk scorer 145 to adjust the risk scores by three point and indicate a common characteristic of the eighty percent of the identified processes such as using at least 30 mW of power.

The server 110 provides the blacklist 170 and whitelist 175 to the client devices 105. The client devices 105 receive the blacklist 170 and compares processes to the blacklist 170. If a client device matches a process that is currently running, installing, or starting to a process on the blacklist 170, then the client device may terminate the process. The client devices 105 receive the whitelist 175 and compares processes to the whitelist 175. If a client device matches a process that is currently running, installing, or starting to a process on the whitelist 175, then the client device allows the process to continue running. If a client device does not match a process to one on the whitelist 175 or blacklist 170, then the client device may provide process data 130 to the server 110.

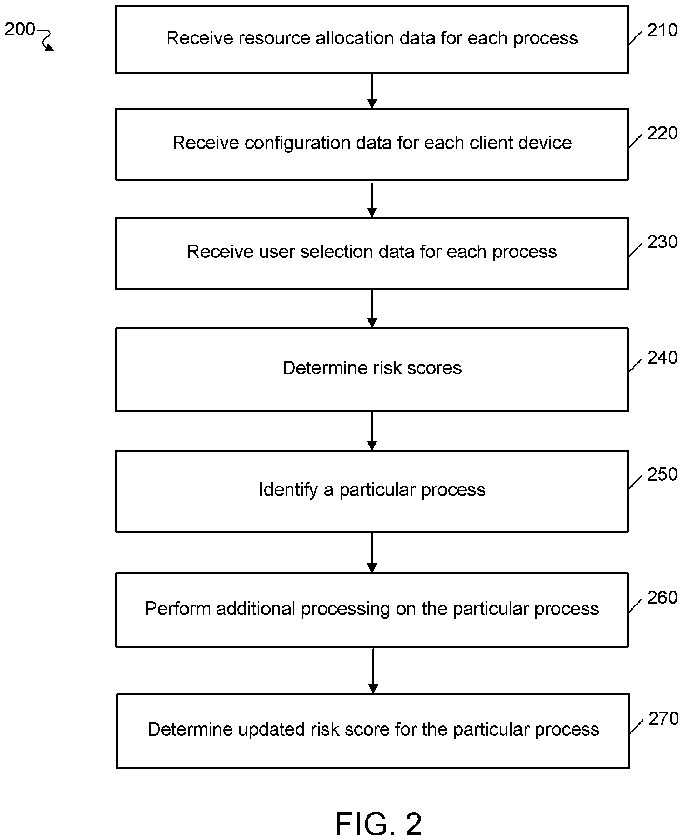

FIG. 2 is a flow chart of an example process 200 for process categorization using crowdsourcing. In general, the process 200 analyzes the processes to determine the likelihood that the process that are malicious and those that are not based on data received from multiple client devices. The process 200 will be described as being performed by a computer system comprising one or more computers, for example, the server 110 as shown in FIG. 1.

The system receives resource allocation data for each process from each client device (510). The resource allocation data specifies the resources requested by each process on each client device. The resources may include an amount of memory requested, an amount of processor time requested, an amount of power consumed running the process, or requested network connections. Each client device may collect the resource allocation data when the client device first executes the process or while the process is currently running. As an example, the resource allocation data may indicate that process 410 requested five percent of the CPU time, 24 MB of RAM, access to port 20, and the client device consumed 30 mW running the process 410.

In some implementations, the client devices are trusted devices. For system to trust the client devices, the client devices may be managed by a single entity such as a corporate IT department. Trusted client devices may have particular software installed on the devices that certify that the device is free of virus or any other malicious software. In some implementations, a trusted device should be operated by a trusted user to maintain the trusted status. A trusted user may be an employee of the company with the corporate IT department that manages the devices. A trusted user may also be a user that the system has verified in another way.

In some implementations, the system receives data indicating available resources when a process executes. Each time before a process executes, the client device may take a snapshot of the available resources or a trusted monitoring process may relay such details to the system. For example, when before process 410 executes, a laptop client may have 50% of the CPU available and 2 GB of RAM.

The system receives configuration data for each client device (520). The configuration data may identify a type of device, a manufacturer of the device, an operating system of the device, a type and speed of each processor, a type and size of memory, a type and size of a hard drive, any networking devices, and any output devices. For example, the configuration data may indicate that the device is manufactured by Laptop Company, running Laptop OS, has a 64-bit ARM processor running at 1.5 GHz, 4 MB of RAM, and a 250 GB hard drive.

The system receives user selection data for each process and for each client device (530). Before or while a process executes, the system may prompt the user to input whether the process is safe to execute or continue to execute. The client device passes this information onto the system. For example, as process 410 is about to execute, the client device prompts the user to indicate whether the process 410 is safe to execute or not safe to execute. The client device provides the user's selection of not safe to execute to the system.

The system determines a risk score for each process (540). The risk score indicates the likelihood that a process is a malicious process. The risk score is based on the resource allocation data, the configuration of the client device, and the user selection data. In some implementations, the risk score is based on the resources available when a client device executes a process. For example, if a process tries to request all or most of the available resources, then that may increase the risk score. In some implementations, the risk score is based on a ratio of the available resources to the resources requested by the process or a ratio of the resource configuration of the client device to the resources requested by the process.

The system identifies particular processes for additional processing (550). In some implementations, the particular processes may be ones with the highest risk scores. For example, the system may identify the processes with the risk scores in the top ten percent. As another example, the system may identify the processes with the risk scores in the lowest ten percent.

The system performs additional processing on the particular processes (560). The additional processing may consist of the server executing the particular processes. In some implementations, the server may run the particular processes and monitor the resources requested during runtime. In some implementations, the server may initiate the particular processes, monitor the resources requested just before the particular processes begin to run and then terminate the particular processes. In some implementations, the server may install the particular processes and monitor the resources requested during installation.

The system determines an updated risk score for the particular processes (570). The updated risk score is based on the initially calculated risk score and the system's additional processing. If the system determines that the risk score is too low for a process, then the system increases the risk score for that process. If the system determines that the risk score is too high for a process, then the system decreases the risk score for that process. In some implementations, the system compares the risk score to a risk score threshold. If the risk score is higher than the threshold, then the system adds the process to a blacklist. If the risk score is lower than the threshold, then the system adds the process to a whitelist. The system provides the whitelist and blacklist to the client devices.

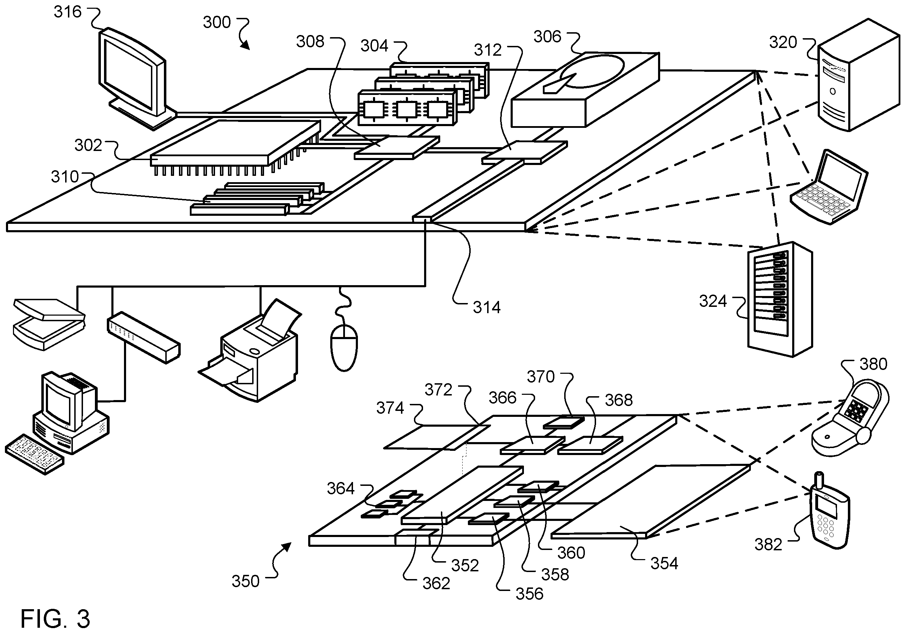

FIG. 3 shows an example of a computing device 300 and a mobile computing device 350 that can be used to implement the techniques described here. The computing device 300 is intended to represent various forms of digital computers, such as laptops, desktops, workstations, personal digital assistants, servers, blade servers, mainframes, and other appropriate computers. The mobile computing device 350 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 300 includes a processor 302, a memory 304, a storage device 306, a high-speed interface 308 connecting to the memory 304 and multiple high-speed expansion ports 310, and a low-speed interface 312 connecting to a low-speed expansion port 314 and the storage device 306. Each of the processor 302, the memory 304, the storage device 306, the high-speed interface 308, the high-speed expansion ports 310, and the low-speed interface 312, are interconnected using various busses, and may be mounted on a common motherboard or in other manners as appropriate. The processor 302 can process instructions for execution within the computing device 300, including instructions stored in the memory 304 or on the storage device 306 to display graphical information for a GUI on an external input/output device, such as a display 316 coupled to the high-speed interface 308. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 304 stores information within the computing device 300. In some implementations, the memory 304 is a volatile memory unit or units. In some implementations, the memory 304 is a non-volatile memory unit or units. The memory 304 may also be another form of computer-readable medium, such as a magnetic or optical disk.

The storage device 306 is capable of providing mass storage for the computing device 300. In some implementations, the storage device 306 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 302), perform one or more methods, such as those described above. The instructions can also be stored by one or more storage devices such as computer- or machine-readable mediums (for example, the memory 304, the storage device 306, or memory on the processor 302).

The high-speed interface 308 manages bandwidth-intensive operations for the computing device 300, while the low-speed interface 312 manages lower bandwidth-intensive operations. Such allocation of functions is an example only. In some implementations, the high-speed interface 308 is coupled to the memory 304, the display 316 (e.g., through a graphics processor or accelerator), and to the high-speed expansion ports 310, which may accept various expansion cards (not shown). In the implementation, the low-speed interface 312 is coupled to the storage device 306 and the low-speed expansion port 314. The low-speed expansion port 314, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 300 may be implemented in a number of different forms, as shown in the figure. For example, it may be implemented as a standard server 320, or multiple times in a group of such servers. In addition, it may be implemented in a personal computer such as a laptop computer 322. It may also be implemented as part of a rack server system 324. Alternatively, components from the computing device 300 may be combined with other components in a mobile device (not shown), such as a mobile computing device 350. Each of such devices may contain one or more of the computing device 300 and the mobile computing device 350, and an entire system may be made up of multiple computing devices communicating with each other.

The mobile computing device 350 includes a processor 352, a memory 364, an input/output device such as a display 354, a communication interface 366, and a transceiver 368, among other components. The mobile computing device 350 may also be provided with a storage device, such as a micro-drive or other device, to provide additional storage. Each of the processor 352, the memory 364, the display 354, the communication interface 366, and the transceiver 368, are interconnected using various buses, and several of the components may be mounted on a common motherboard or in other manners as appropriate.

The processor 352 can execute instructions within the mobile computing device 350, including instructions stored in the memory 364. The processor 352 may be implemented as a chipset of chips that include separate and multiple analog and digital processors. The processor 352 may provide, for example, for coordination of the other components of the mobile computing device 350, such as control of user interfaces, applications run by the mobile computing device 350, and wireless communication by the mobile computing device 350.

The processor 352 may communicate with a user through a control interface 358 and a display interface 356 coupled to the display 354. The display 354 may be, for example, a TFT (Thin-Film-Transistor Liquid Crystal Display) display or an OLED (Organic Light Emitting Diode) display, or other appropriate display technology. The display interface 356 may comprise appropriate circuitry for driving the display 354 to present graphical and other information to a user. The control interface 358 may receive commands from a user and convert them for submission to the processor 352. In addition, an external interface 362 may provide communication with the processor 352, so as to enable near area communication of the mobile computing device 350 with other devices. The external interface 362 may provide, for example, for wired communication in some implementations, or for wireless communication in other implementations, and multiple interfaces may also be used.

The memory 364 stores information within the mobile computing device 350. The memory 364 can be implemented as one or more of a computer-readable medium or media, a volatile memory unit or units, or a non-volatile memory unit or units. An expansion memory 374 may also be provided and connected to the mobile computing device 350 through an expansion interface 372, which may include, for example, a SIMM (Single In Line Memory Module) card interface. The expansion memory 374 may provide extra storage space for the mobile computing device 350, or may also store applications or other information for the mobile computing device 350. Specifically, the expansion memory 374 may include instructions to carry out or supplement the processes described above, and may include secure information also. Thus, for example, the expansion memory 374 may be provide as a security module for the mobile computing device 350, and may be programmed with instructions that permit secure use of the mobile computing device 350. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier. that the instructions, when executed by one or more processing devices (for example, processor 352), perform one or more methods, such as those described above. The instructions can also be stored by one or more storage devices, such as one or more computer- or machine-readable mediums (for example, the memory 364, the expansion memory 374, or memory on the processor 352). In some implementations, the instructions can be received in a propagated signal, for example, over the transceiver 368 or the external interface 362.

The mobile computing device 350 may communicate wirelessly through the communication interface 366, which may include digital signal processing circuitry where necessary. The communication interface 366 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 368 using a radio-frequency. In addition, short-range communication may occur, such as using a Bluetooth, WiFi, or other such transceiver (not shown). In addition, a GPS (Global Positioning System) receiver module 370 may provide additional navigation- and location-related wireless data to the mobile computing device 350, which may be used as appropriate by applications running on the mobile computing device 350.

The mobile computing device 350 may also communicate audibly using an audio codec 360, which may receive spoken information from a user and convert it to usable digital information. The audio codec 360 may likewise generate audible sound for a user, such as through a speaker, e.g., in a handset of the mobile computing device 350. Such sound may include sound from voice telephone calls, may include recorded sound (e.g., voice messages, music files, etc.) and may also include sound generated by applications operating on the mobile computing device 350.

The mobile computing device 350 may be implemented in a number of different forms, as shown in the figure. For example, it may be implemented as a cellular telephone 380. It may also be implemented as part of a smart-phone 582, personal digital assistant, or other similar mobile device.

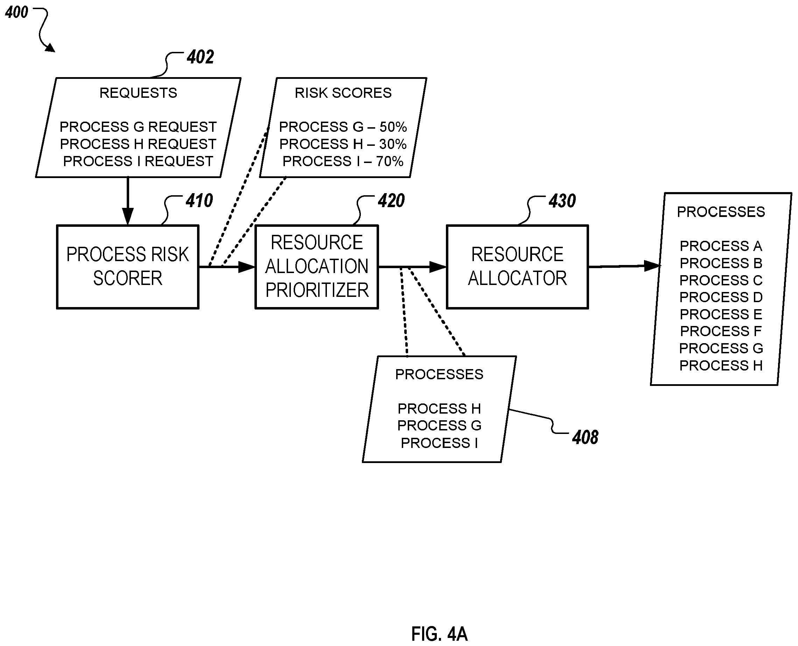

FIG. 4A is a block diagram of an example system 400 for allocating resources to processes based on security risk. Briefly, and as described in further detail below, the system 400 may include a process risk scorer 410, a resource allocation prioritizer 420, and a resource allocator 430.

The process risk scorer 410 may determine risk scores for processes executing on the system 400. For example, the process risk scorer 410 may determine a first risk score for a first process executing on the system 400 and a second risk score for a second process executing on the system 400. A risk score of a process may reflect a likelihood that the process is a malicious process. For example, an integral process of an operating system may have a risk score of 0% that reflects that the process has no likelihood of being a malicious process. In another example, a process that has never been seen before may have a baseline risk score of 50% that reflects a moderate likelihood that the process is a malicious process. A baseline risk score may be a default risk score assigned to processes for which characteristics cannot be examined or verified. Other baseline risk scores may be 30%, 70%, or some other amount set by a system administrator. In yet another example, a known malicious process may have a risk score of 400% that reflects a high likelihood that the process is a malicious process. In still another example, the process risk scorer 410 may determine a risk score for a process based on characteristics of the process, e.g. name, hash of the file, resources requested, number of times run before, average of resources requested per run over the process' history and how it compares, e.g., what is the delta, to resources requested now, how many people have run this process before, and other information.

The process risk scorer 410 may determine risk scores for processes executing on the system 400 in response to a request from a process for allocation of resources. For example, the process risk scorer 410 may receive multiple requests 402 including a request from "Process G" for an allocation of 2GB of main memory, a request from "Process H" for an allocation of 1.5GB of main memory, and a request from "Process I" for an allocation of 1GB of main memory.

In response to receiving the requests 402, the process risk scorer 410 may determine risk scores for each of the processes. For example, the process risk scorer 410 may determine a risk score for each of Process G, H, and I. The process risk scorer 410 may determine the risk score for a process based on comparing the process with previously scored processes. For example, the process risk scorer 410 may determine a name of a process executing on the system 400 matches the name of a process stored in a table mapping process names to risk scores, and determine the risk score of the process executing on the system 400 is the risk score in the table for the matching process name. In another example, the process risk scorer 410 may determine a hash of a process executing on the system 400 matches the hash of a process stored in a table mapping hashes to risk scores, and determine the risk score of the process executing on the system 400 is the risk score in the table for the matching hash.

In another example, the process risk scorer 410 may calculate a risk score for the processes based on characteristics of the process. For example, the process risk scorer 410 may calculate a risk score for a process based on memory usage of the process, read and write activity of the process, frequency of execution of the process, currently running parent processes, number of sibling processes, and other characteristics of the process. In a particular example, the process risk scorer 410 may exponentially increase a risk score for a process as the process more frequently makes requests for resources.

The process risk scorer 410 may provide an indication of the multiple requests along with risk scores for each of the processes making a request to the resource allocation prioritizer 420. For example, the process risk scorer 410 may provide, to the resource allocation prioritizer 420, an indication that Processes G-I are associated with risk scores of 50%, 30%, and 70%, respectively, and an indication that "Process G" is requesting 2GB of main memory, "Process H" is requesting 1.5GB of main memory, and "Process I" is requesting 1GB of main memory.

The resource allocation prioritizer 420 may receive an indication of the requests and risk scores from the process risk scorer 410, and determine a resource allocation priority. For example, the resource allocation prioritizer 420 may receive an indication that Processes G-I are associated with risk scores of 50%, 30%, and 70%, respectively, and an indication that "Process G" is requesting 2GB of main memory, "Process H" is requesting 1.5GB of main memory, and "Process I" is requesting 1GB of main memory, and determine a resource allocation priority 408 that indicates that the priority for resource allocation of the processes making requests is "Process H," "Process G," and "Process I," in order by highest priority to lowest priority.

The resource allocation prioritizer 420 may determine the resource allocation priority based on the risk scores of the processes. For example, the resource allocation prioritizer 420 may determine the resource allocation priority 408 that indicates that processes that have risk scores that reflect a lower likelihood that the process is a malicious process have a higher priority than a priority of processes that have risk scores that reflect a higher likelihood that the process is a malicious process. The resource allocation prioritizer 420 may determine the resource allocation priority based on ranking the processes by risk score, and then determining the priority for allocation resources to the processes based on the ranking of the processes. For example, the resource allocation prioritizer 420 may rank "Process H" with a 30% risk score higher than "Process G" with a 50% risk score, and accordingly, determine "Process H" should have a higher priority for resource allocation than "Process G."

The resource allocation prioritizer 420 may provide the resource allocation priority to the resource allocator 430. For example, the resource allocation prioritizer 420 may provide, to the resource allocator 430, the resource allocation priority 408 that indicates that "Process H" has a highest priority, followed by "Process G" and "Process I."

The resource allocator 430 may receive the resource allocation priority and the request, and determine resource allocations. For example, the resource allocator 430 may determine to allocate resources to fulfill the request for Process H and G, but not fulfill the request for Process I. In another example, the resource allocator 430 may determine to allocate resources to fulfill the request for Process H, but not to allocate resources to fulfill the requests for Process G and I.

The resource allocator 430 may allocate physical and/or virtual resources based on an availability of resources on the system 400. For example, the resource allocator 430 may either directly or virtually, e.g., via address space mappers/translators and indexing in general, or in conjunction with other specific techniques, allocate main memory, e.g., either directly or virtually, based on an amount of main memory that has not already been allocated to processes executing on the system 400. A resource may be considered available if it is not already currently allocated to a process. For example, if a system 400 has 16GB of main memory and 10GB of the main memory has been allocated to executing processes, the system 400 may be considered to have 6GB of the main memory available.

In response to receiving requests, the resource allocator 430 may determine the resource requested and determine an availability of the resource. For example, in response to receiving the requests for 2GB of main memory, 1.5GB of main memory, and 1GB of main memory, the resource allocator 430 may determine that main memory is requested, and determine that the system 400 has available 1GB of main memory. In another example, in response to receiving a request for central processing unit (CPU) utilization, the resource allocator 430 may determine that 90% of the CPU processing ability is being used, and determine that the system 400 has available 10% of the CPU processing ability. In another example, the resource allocator 430 may determine that 90% of the maximum number of threads that the system 400 may use are currently being used, and determine that the system 400 has available 40% of the maximum number of threads.

The resource allocator 430 may allocate resources based on whether the availability of the resource requested is sufficient to fulfill the requests. For example, the resource allocator 430 may allocate resources in response to the requests for 2GB, 1.5GB, and 1GB of main memory based on determining whether 1GB of main memory available is sufficient to fulfill all the requests. If the resource allocator 430 determines that the availability of the resource requested is sufficient to fulfill all the requests, the resource allocator 430 may fulfill all the requests regardless of the priority of the processes making the requests as indicated by the resource allocation priority. For example, if the resource allocator 430 determines that the 6GB of main memory available is sufficient to fulfill all the requests 402 for 2GB, 1.5GB, and 1GB of main memory, the resource allocator 430 may fulfill the requests regardless of the priorities of the processes making the requests.

If the resource allocator 430 determines that the availability of the resource requested is insufficient to fulfill the requests, the resource allocator 430 may allocate resources based on the resource allocation priority. For example, if the resource allocator 430 receives the requests for 2GB, 1.5GB, and 1GB of main memory and determines that only 1GB of main memory is available and 1GB is insufficient to fulfill the requests, the resource allocator 430 may allocate resources based on the resource allocation priority and fulfill the requests for Process H and G, but not Process I.

When allocating resources based on the resource allocation priority, the resource allocator 430 may determine whether to fulfill a request of the requests in order of priority of the processes associated with the request. For example, the resource allocator 430 may first determine whether 1GB of main memory is enough to fulfill the request for 2GB of main memory from Process H, with the highest priority, determine that 1GB of main memory is enough to fulfill the request, in response, allocate 2GB of main memory to Process H, then determine whether 2GB of main memory is enough to fulfill the request for 1.5GB of main memory from Process G, with the second most highest priority, determine that 2GB of main memory is enough to fulfill the request, in response, allocate 1.5GB of main memory to Process G, determine whether 0GB of main memory is enough to fulfill the request for 1GB of main memory from Process I, with the third most highest priority, determine that 0GB is not enough, and in response, not fulfill the request from Process I.

In determining not to fulfill a request, the resource allocator 430 may queue the request for later fulfillment when more resources become available. For example, in response to determining not to fulfill a request from "Process I," the resource allocator 430 may queue the request for 1GB of main memory for "Process I" and fulfill the request once the system determines that 1GB of main memory is available. In some implementations, queued requests may be prioritized. For example, if the resource allocator 430 later receives a request for "Process G" for 1GB of main memory, determines that 1GB of main memory is available and that "Process G" is associated with a higher priority than "Process H," which already has a previously queued request for 1GB, the resource allocator 430 may determine to first fulfill the request for "Process G" when 1GB of main memory becomes available as "Process G" has a higher priority than "Process H."

Different configurations of the system 400 may be used where functionality of the process risk scorer 410, the resource allocation prioritizer 420, and the resource allocator 430 may be combined, further separated, distributed, or interchanged. The system 400 may be implemented in a single device or distributed across multiple devices.

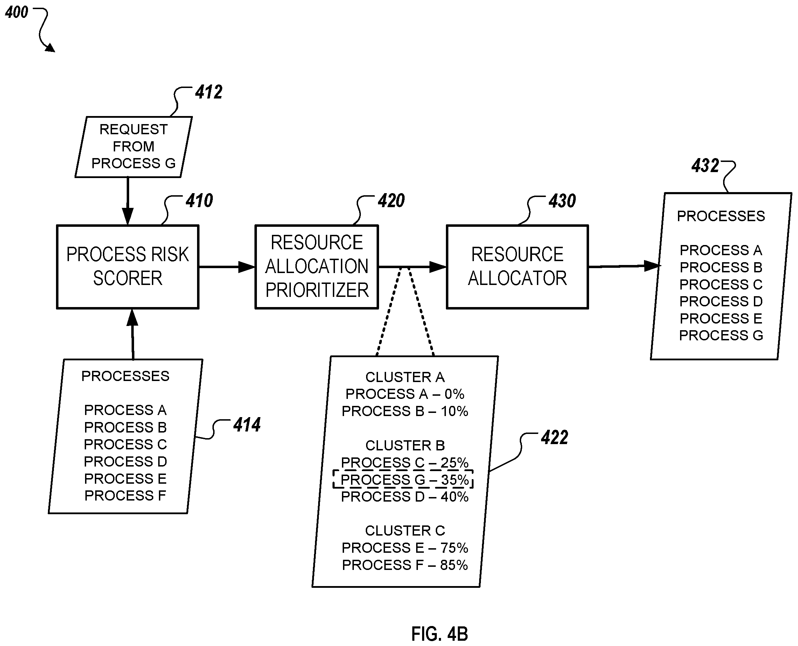

FIG. 4B is a block diagram of an example system 400 for allocating resources to processes based on security risk. Briefly, and as described in further detail below, the system 400 may include a process risk scorer 410, a resource allocation prioritizer 420, and a resource allocator 430. In the example, the system 400 may reduce an allocation of resources to existing processes.

The process risk scorer 410 may determine risk scores for processes executing on the system 400 in response to a request from a process for allocation of resources. For example, the process risk scorer 410 may receive a request 412 from "Process G" for an allocation of 2GB of main memory. In response to receiving a request for resources from a process, the process risk scorer 410 may identify other processes executing on the system 400. For example, in response to receiving the request 412 from "Process G" for an allocation of 2GB of main memory, the process risk scorer 410 may identify or maintain a list 414 of processes that indicates that Processes A-F are executing on the system 400.

The process risk scorer 410 may determine risk scores for each of the identified processes. For example, the process risk scorer 410 may determine a risk score for "Process G" that is requesting the resource and each of Processes A-F executing on the system 400.

The process risk scorer 410 may provide an indication of the processes executing on the system 400, the associated risk scores of the processes executing on the system 400, and the request to the resource allocation prioritizer 420. For example, the process risk scorer 410 may provide, to the resource allocation prioritizer 420, an indication that Processes A-G are executing on the system 400 and are associated with risk scores of 0%, 10%,25%, 40%, 75%, 85%, and 35%, respectively, and an indication that "Process G" is requesting 2GB of main memory.

In some implementations, in response to a request from a process, the process risk scorer 410 may provide just a risk score for the process to the resource allocation prioritizer 420 which may already maintain a list of existing processes already running and their associated risk scores, where the risk scores of the existing processes may have previously been provided by the process risk scorer 410 when those existing processes provided requests for resources. For example, in response to the request 412 from "Process G," the process risk scorer 410 may just provide a risk score of 35% for "Process G," where the process risk scorer 410 previously provided risk scores of 0%, 10%, 25%, 40%, 75%, 85% for Processes A-F to the resource allocation prioritizer 420 in response to requests previously received from Processes A-F.

The resource allocation prioritizer 420 may receive an indication of the processes executing on the system 400, the associated risk scores of the processes executing on the system 400, and the request from the process risk scorer 410, and determine a resource allocation priority. For example, the process risk scorer 410 may provide to the resource allocation prioritizer 420 an indication that Processes A-G are executing on the system 400 and are associated with risk scores of 0%, 10%, 25%, 40%, 75%, 85%, and 35%, respectively, and an indication that "Process G" is requesting 2GB of main memory, and determine a resource allocation priority 422 that indicates that the priority of the processes for resource allocation is "Process A," "Process B," "Process C," "Process G," "Process D," "Process E," and "Process F," in order by highest priority to lowest priority.

The resource allocation prioritizer 420 may determine the resource allocation priority based on the risk scores of the processes. For example, the resource allocation prioritizer 420 may determine the resource allocation priority 422 that indicates that processes that have risk scores that reflect a lower likelihood that the process is a malicious process have a higher priority than processes that have risk scores that reflect a higher likelihood that the process is a malicious process. The resource allocation prioritizer 420 may determine the resource allocation priority based on ranking the processes by risk score, and then determining the priority for allocation resources to the processes based on the ranking of the processes. For example, the resource allocation prioritizer 420 may rank "Process A" with a 0% risk score higher than "Process B" with a 10% risk score, and accordingly, determine "Process A" should have a higher priority for resource allocation than "Process B."

In some implementations, the resource allocation prioritizer 420 may determine the resource allocation priority based on clusters of processes. For example, the resource allocation prioritizer 420 may determine a resource allocation priority that clusters "Process A" with a risk score of 0% and "Process B" with a risk score of 10% in "Cluster A," clusters "Process C" with a risk score of 25%, "Process G" with a risk score of 35%, and "Process D" with a risk score of 40% in "Cluster B," and clusters "Process E" with a risk score of 75% and "Process F" with a risk score of 85% in "Cluster C." The resource allocation prioritizer 420 may prioritize processes in the same cluster similarly. For example, the resource allocation prioritizer 420 may assign a priority of high to processes in "Cluster A," a priority of moderate for processes in "Cluster B," and a priority of low to processes in "Cluster C."

The resource allocation prioritizer 420 may classify processes into clusters based on risk scores. For example, the resource allocation prioritizer 420 may classify "Process A" with a risk score of 0% and "Process B" with a risk score of 40% in a cluster that includes processes with risk scores between 0%-33%. In some implementations, the resource allocation prioritizer 420 may classify processes based on clusters that include a predetermined range of risk scores. For example, a high priority cluster may include processes with risk scores that range from 0-33%, a medium priority cluster may include processes with risk scores that range from 34%-66%, and a low priority cluster may include processes with risk scores that range from 67%-100%. More specifically, the resource allocation prioritizer 420 may perform dynamic clustering using k-means or a similar or modified version of k-means for small datasets. For example, the prioritizer 420 may use the algorithm described in "Dynamic Clustering of Data with Modified K-Means Algorithm" by Ahamed Shafeeq B M and Hareesha K S (http://www.ipcsit.com/vol27/43-ICICN2012-N20017.pdf) or the algorithm described in "A Dynamic Clustering Algorithm Based on Small Data Set" by Tao Peng, Minghua Jiang, and Ming Hu.

In some implementations, the resource allocation prioritizer 420 may classify processes into clusters based on a number of processes executing on the system 400 and a maximum number of processes per cluster. For example, the resource allocation prioritizer 420 may determine that there are twenty processes running and a maximum of four processes per cluster, and in response, determine to classify the twenty processes into five clusters of four processes each, and classify the four processes with the lowest risk scores in the first cluster, the four processes with the next lowest risk scores in the second cluster, etc.

The resource allocation prioritizer 420 may provide the resource allocation priority to the resource allocator 430. For example, the resource allocation prioritizer 420 may provide, to the resource allocator 430, the resource allocation priority 422 that indicates that "Process A" with a risk score of 0% and "Process B" with a risk score of 10% are in "Cluster A" and have a highest priority, "Process C" with a risk score of 25%, "Process G" with a risk score of 35%, and "Process D" with a risk score of 40% are in "Cluster B" and have a moderate priority, and "Process E" with a risk score of 75% and "Process F" with a risk score of 85% are in "Cluster C" with a low priority.

The resource allocator 430 may receive the resource allocation priority and the request, and determine resource allocations. For example, the resource allocator 430 may determine to allocate resources to fulfill the request 412 for Process G if Process G is indicated by the resource allocation priority 422 as having a higher priority than one or more other processes. In another example, the resource allocator 430 may determine not to allocate resources to fulfill the request 412 for Process G if Process G is indicated by the resource allocation priority 422 as having a lower priority than any other process and insufficient remaining resources remain to fulfill the request. In yet another example, the resource allocator 430 may determine to allocate resources to fulfill the request 412 for Process G if Process G is indicated by the resource allocation priority 422 as having a lower priority than all other processes in the resource allocation priority, but sufficient resources remain to fulfill the request.

In response to receiving a request, the resource allocator 430 may determine the resource requested by the response and determine an availability of the resource. For example, in response to receiving the request 412 for 2GB of main memory, the resource allocator 430 may determine that main memory is requested, and determine that the system 400 has available 6GB of main memory.

The resource allocator 430 may allocate resources based on whether the availability of the resource requested is sufficient to fulfill the request. For example, the resource allocator 430 may allocate resources in response to the request 412 for 2GB of main memory based on determining whether 6GB of main memory available is sufficient to fulfill the request. If the resource allocator 430 determines that the availability of the resource requested is sufficient to fulfill the request, the resource allocator 430 may fulfill the request regardless of the priority of the process making the request as indicated by the resource allocation priority. For example, if the resource allocator 430 determines that the 6GB of main memory available is sufficient to fulfill the request 412 for 2GB of main memory from "Process G," the resource allocator 430 may fulfill the request 412 whether "Process G" has a high priority, a medium priority, or a low priority.

If the resource allocator 430 determines that the availability of the resource requested is insufficient to fulfill the request, the resource allocator 430 may allocate resources based on the resource allocation priority. For example, if the resource allocator 430 receives the request 112 for 2GB of main memory from "Process G" and determines that only 1GB of main memory is available, the resource allocator 430 may allocate resources based on the resource allocation priority.

When allocating resources based on the resource allocation priority, the resource allocator 430 may determine whether the process requesting the resource has a higher priority than any other processes executing on the system 400. For example, when receiving the request 412 from "Process G" for 2GB of main memory and determining that only 1GB of main memory is available, the resource allocator 430 may determine that "Process G" has a higher priority than all of Processes A-F. In another example, when receiving a request from "Process G" for 2GB of main memory and determining that only 1GB of main memory is available, the resource allocator 430 may determine that "Process G" has a lower priority than all of Processes A-F.

In response to determining that the process making the request does not have a higher priority than another process executing on the system 400 and the availability of the resource requested is insufficient to fulfill the request, the resource allocator 430 may reject the request or queue the request. For example, in response to determining that "Process G" has a lower priority than all of Processes A-F and that 1GB of main memory is available but 2GB of main memory is requested, the resource allocator 430 may reject the request 412 or queue to try fulfilling the request later when more resources become available.

In response to determining that the process making the request has a higher priority than another process executing on the system 400 and the availability of the resource requested is insufficient to fulfill the request, the resource allocator 430 may determine whether reducing a resource allocation of the other process enables the system 400 to fulfill the request from the process. For example, in response to determining that "Process G" has a higher priority than "Process F" and that 1GB of main memory is available but 2GB of main memory is requested, the resource allocator 430 may determine whether reducing an allocation of main memory to "Process F" enables the system 400 to fulfill the request 412. Reducing resource allocations to running processes may be a configurable option that is disabled by default.

In some implementation, the system 400 may determine whether reducing the resource allocation to multiple other processes, with a lower priority than the process making the request, in a way that does not comprise integrity or performance of the other processes enables the system 400 to fulfill the request. For example, the system 400 may determine whether reducing the resource allocation to Processes D-F, with a lower priority than "Process G" making the request 412, in a way that does not comprise integrity or performance of Processes D-F enables the request 412 to be fulfilled.

In response to determining that reducing the resource allocation to multiple other processes, with a lower priority than the process making the request, in a way that does not comprise integrity or performance of the other processes does not enable the system 400 to fulfill the request, the resource allocator 430 may reject the request or queue the request. For example, in response to determining that "Process F" is allocated 0.5GB of main memory and determining that increasing the available main memory by 0.5GB from 1GB to 1.5GB is still insufficient to fulfill the request for 2GB of main memory, the system 400 may reject the request.

In response to determining that reducing the resource allocation to multiple other processes, with a lower priority than the process making the request, in a way that does not comprise integrity or performance of the other processes enables the system 400 to fulfill the request, the resource allocator 430 may reduce the resource allocation of the other process and fulfill the request. For example, in response to determining that "Process F" is allocated 1.5GB of main memory and determining that increasing the available main memory by 1GB from 1GB to 2GB is sufficient to fulfill the request 412 for 2GB of main memory from "Process G," the system 400 may reduce the main memory allocation to "Process F" to 0.5GB of main memory and allocate 2GB of main memory to "Process G." In another example, in response to determining that "Process F" is allocated 1GB of main memory and determining that increasing the available main memory by 1GB from 1GB to 2GB is sufficient to fulfill the request for 2GB of main memory from "Process G," the system 400 may securely suspend or terminate "Process F," which deallocates 1GB of main memory from "Process F," and allocate 2GB of main memory to "Process G." In some implementations, the system 400 may default to not terminating or suspending existing processes but may enable a user to select the option of terminating or suspending existing processes.

In some implementations, the resource allocator 430 may allocate resources based on the clusters of processes indicated by the resource allocation priority. For example, the resource allocator 430 may allocate resources in response to the request 412 from "Process G" based on the clusters indicated in the resource allocation priority 422. The resource allocator 430 may allocate resources based on assigning a similar priority to processes of the same cluster. For example, the resource allocator 430 may receive a resource allocation priority in which "Process G" is indicated as being in "Cluster B" with "Process D," and "Process E" and "Process F" are in "Cluster C" with a lower priority than "Cluster B." Accordingly, even though the resource allocation priority 422 may indicate that "Process D" has a higher risk score than "Process G," the resource allocator 430 may not consider whether reducing a resource allocation to "Process G" would enable the system 400 to fulfill a request.

The resource allocator 430 may determine which processes should execute on the system 400 based on the resource allocations. For example, in response to determining to reduce a resource allocation to "Process F" to fulfill the request from "Process G," the resource allocator 430 may determine to securely suspend or terminate "Process F" resulting in the list 458 of Processes A-E and G shown executing on the system 400. In another example, in response to determining to reject the request 412 from "Process G," the resource allocator 430 may determine to securely suspend or terminate "Process G." As discussed above, whether the resource allocator 430 makes determinations to securely suspend or terminate may be a configurable option that may be disabled by default.

In some implementations, the resource allocator 430 may allocate resources based on a resource allocation priority and whether an amount of resources allocated to processes still enable the processes to execute. For example, in response to determining that 2GB of main memory requested by "Process G" is not available and that "Process G" has a lower priority than any other process executing on the system 400, the resource allocator 430 may determine that "Process G" can execute with 1GB of main memory and that 1GB of main memory is available, and in response, allocate 1GB of main memory to "Process G." The resource allocator 430 may determine an amount of resources that may be reduced for a process and still enable the process to execute based on querying the process. For example, the resource allocator 430 may determine that "Process G" can execute with only 1GB of the 2GB of main memory requested based on querying "Process G" whether 1GB is sufficient for the process to execute. Additionally or alternatively, the resource allocator 430 may determine an amount of resources that may be reduced for a process and still enable the process to execute based on a predetermined minimum resource allocation. For example, the resource allocator 430 may determine that "Process G" can execute with only 1GB of the 2GB of main memory requested based on information stored in a database that indicates that "Process G" can execute with a minimum main memory allocation of 1GB. In the example, if for some reason "Process G" cannot execute as intended, the request for "Process G" may be queued.

In some implementations, the resource allocator 430 may determine the processes to reduce allocation of resources based on the clusters in the resource allocation priority. For example, the resource allocator 430 may determine whether reducing an allocation of resources to processes may enable a request to be fulfilled based on allowing any reduction in resources for a process in a cluster two or more levels below in priority of a cluster of the process making the request, and allowing a reduction in resources to a minimum sufficient for execution for processes in a cluster one level below in priority of a cluster of the process making the request. In some other implementations, the resource allocator 430 may instead allow any reduction in resources for processes in clusters below in priority of a cluster of the process making the request, and allow a reduction in resources to a minimum sufficient for execution of a process that is both (i) in the same cluster as the process making the request and (ii) has a risk score that reflects a greater likelihood of being a malicious process than the process making the request.

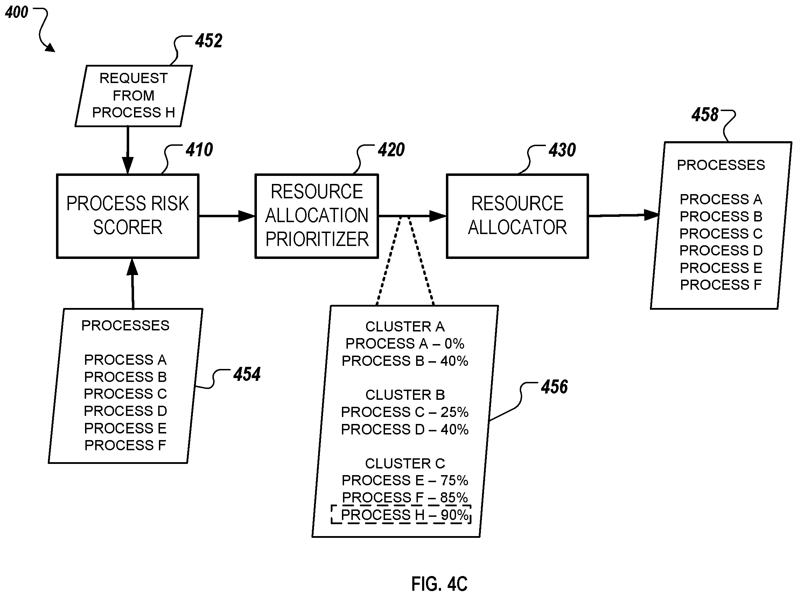

FIG. 4C is a block diagram of the example system 400 for allocating resources to processes based on security risk. However, FIG. 4C illustrates that when the request 452 is received from "Process H" that has a risk score that reflects a higher likelihood that the process is a malicious process than a likelihood of any other process executing on the system 400, the request 452 may be rejected or queued.

As shown, the process risk scorer 410 may receive the request 452 from "Process H." For example, the process risk scorer 410 may receive the request 452 from "Process H" to use 10% of a network traffic bandwidth of the system 400. In response to receiving the request 452, the process risk scorer 410 may identify the other processes executing on the system 400 and determine a risk score for all of the processes. For example, the process risk scorer 410 may identify in a list 454 that Processes A-F are executing on the system 400 and determine risk scores of 0%, 10%, 25%, 40%, 75%, and 85% for "Processes A-F," respectively, and a risk score of 90% for "Process H."

As discussed above, in some implementations, in response to a request from a process, the process risk scorer 410 may provide just a risk score for the process to the resource allocation prioritizer 420 which may already maintain a list of existing processes already running and their associated risk scores, where the risk scores of the existing processes may have previously been provided by the process risk scorer 410 when those existing processes provided requests for resources. For example, in response to the request 452 from "Process H," the process risk scorer 410 may just provide a risk score of 90% for "Process H," where the process risk scorer 410 previously provided risk scores of 0%, 10%, 25%, 40%, 75%, and 85% for Processes A-F in response to requests previously received from Processes A-F.

The resource allocation prioritizer 420 may receive the request 452, indications of processes, and risk scores, and determine a resource allocation priority 456. For example, the resource allocation prioritizer 420 may rank the processes by risk score and determine that "Process H" has the lowest priority as it has a risk score that reflects a greatest likelihood of the process being a malicious process.

The resource allocator 430 may allocate resources based on the resource allocation priority 456. For example, the resource allocator 430 may determine that the request 452 is for 10% of the network traffic bandwidth of the system 400, determine that 5% of the network traffic bandwidth of the system 400 is available, determine that the request 452 is for "Process H" which has a lowest priority as indicated by the resource allocation priority 456, and determine to reject or queue the request, resulting in the list 458 of Processes A-F shown executing on the system 400.

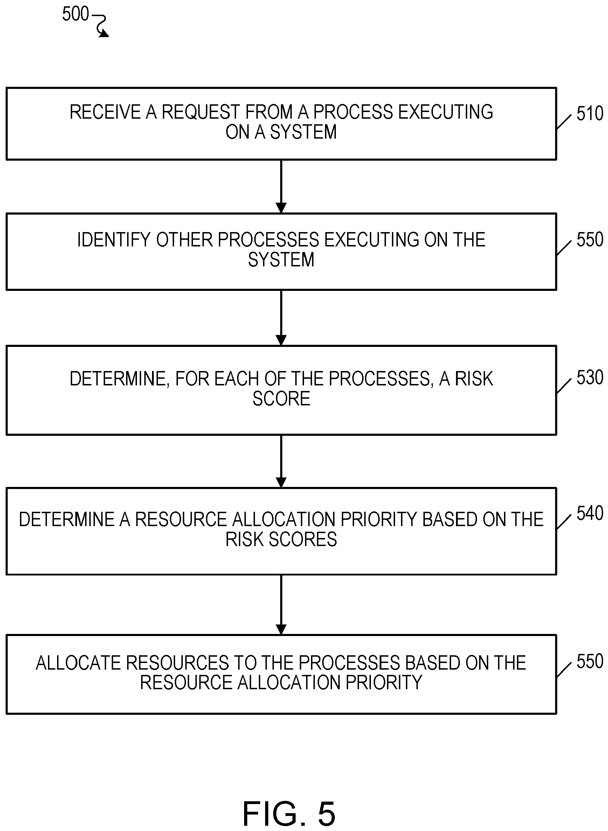

FIG. 5 is a flowchart of an example process 500 for allocating resources to processes based on security risk. The following describes the process 500 as being performed by components of the system 400 that are described with reference to FIGs. 4A-1C. However, the process 500 may be performed by other systems or system configurations.

The process 500 may include receiving a request from a process executing on the system (510). For example, the process risk scorer 410 may receive a request from "Process G" for 20% of a CPU utilization.

The process 500 may include, in response to receiving the request from the process, identifying other processes executing on the system (520). For example, in response to receiving a request from "Process G" for 20% of a CPU utilization, the process risk scorer 410 may identify Processes A-F are executing on the system 400.

The process 500 may include determining, for each of the processes, a risk score (530). For example, the process risk scorer 410 may determine a risk score of 0%, 10%, 25%, 35%, 40%, 75%, and 85% for processes A-C, G, and D-F, respectively.

In other example, in response to receiving a request from "Process G" for 20% of a CPU utilization, the process risk scorer 410 may determine a risk score of 40% for "Process G" and provide the risk score to the resource allocation prioritizer 420. The resource allocation prioritizer 420 may then determine that Processes A-C and D-F are already executing on the system 400 and have associated risk scores of 0%, 10%, 25%, 35%, 75%, and 85%, respectively, previously determined by the process risk scorer 410.

The process 500 may include determining a resource allocation priority based on the risk scores (540). For example, the resource allocation prioritizer 420 may determine to classify "Process A" and "Process B" into "Cluster A" based on determining the corresponding risk scores of 0% and 10% fall within a range of 0% to 33% of "Cluster A," determine to classify "Process C," "Process G," and "Process D" into "Cluster B" based on determining the corresponding risk scores of 25%, 35%, and 40% fall within a range of 34% to 66% of "Cluster B," determine to classify "Process E" and "Process F" into "Cluster C" based on determining the corresponding risk scores of 75% and 85% fall within a range of 67% to 100% of "Cluster C," determine that Cluster A has a high priority, Cluster B has a moderate priority, and Cluster C has a low priority, and generate a resource allocation priority based on the determined clusters and determined priorities.

The process 500 may include allocating resources to the processes based on the resource allocation priority (550). For example, the resource allocator 430 may receive the request from "Process G" for 20% of CPU utilization, determine that only 10% of CPU utilization is available, determine that "Process E" and "Process F" both have a lower priority for resource allocation than "Process G," determine that both "Process E" and "Process F" are using 8% of CPU utilization, determine that reducing the CPU utilization of both "Process E" and "Process F" to 3% would enable the request to be fulfilled in a way that does not comprise integrity or performance of "Process E" and "Process F," reduce the CPU utilization allocated to "Process E" and "Process F" to 3%, and allocate 20% CPU utilization to "Process G."

In some implementations, process risk can be determined based on any of a number of appropriate factors, such as process signatures, process dependencies, and/or resource usage. For example, a first process that uses a minimal amount of a computer system's resources when it runs and that has had a low level of variation in its resource usage over time, may be determined to have a low risk score indicating a low probability that the first process currently poses a security risk. However, a second process that has recently had a large increase in resources usage (e.g., large increase in memory usage, network traffic, CPU usage) can be determined to have a relatively higher risk score that indicates a high probability that the second process is currently a security risk on the computer system. Such risk scores may be used by the computer system to determine how to best manage the first and second processes, such as isolating the second process while allowing the first process to be executed normally (without isolation).

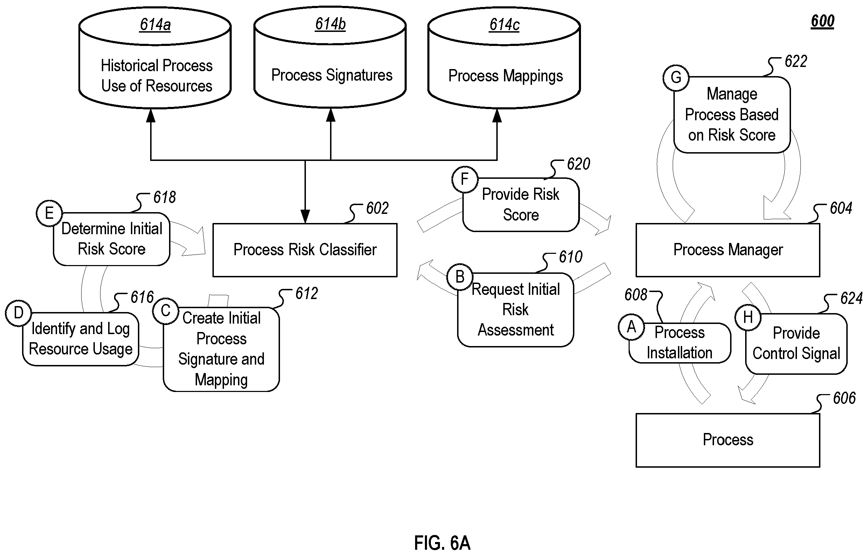

FIGS. 6A-B are a conceptual diagram of an example computer system 600 for determining process risks. The example computer system 600 can be any of a variety of computing environments, including individual computing devices (e.g., laptop computers, desktop computers, mobile computing devices, wearable computing device, computer server) and/or networked groups of computing devices (e.g., server system, cloud computing system, client-server system). The computer system 600 includes an example process risk classifier 602 that is programmed to classify risks posed by processes on the computer system 600, an example process manager 604 that is programmed to manage the execution of processes on the computer system 600 based on risk scores determined by the process risk classifier 602, and an example process 606 on the computer system 600.

Referring to FIG. 6A, the computer system 600 can determine an initial baseline for the process 606 when it is installed on the computer system 600. The initial baseline can include information such as process signatures, dependency mappings, and resource usage for the process 606. The baseline can be used to detect changes to the process 606 over time, such as increased usage of resources, changes in the dependency mapping, and/or changes in the signature for the process, which may indicate that something has happened to the process (e.g., modified by another process, infected with a virus or other malicious code) to cause it to pose an increased or decreased risk to the computer system 600.

As indicated by step A (608), an indication that the process 606 has been installed on the computer system 600 can be provided to the process manager 604. The process manager 604 can be configured on the computer system 600 to receive such notification, such as through event handlers registered with the operating system for the computer system 600. In some implementations, the process manager 604 is a process itself that is running on the computer system 600 between the process 606 and an operating system on the computer system 600. In other implementations, the process manager 604 is a subcomponent of the operating system for the computer system 600. Other implementations of the process manager 604 are also possible, such as processor and/or other chip-based implementations.

In response to receiving the information indicating that the process 606 (which may be an application itself, or a sub-process that is part of an application) has been installed on the computer system 600, the process manager 604 can provide a request to the process risk classifier 602 for initial risk assessment of the process 606, as indicated by step B (610). Like the process manager 604, the process risk classifier 602 can be implemented in any of a variety of ways, such as a process itself, as part of another process (e.g., subcomponent of the process manager 604), as part of the operating system on the computer system 600, chip/processor-based implementations, and/or other appropriate implementations. The process manager 604 and/or the process risk classifier 602 can be implemented in software (e.g., standalone process, application process, operating system component), hardware (e.g., application specific integrated circuit (ASIC), processor modules), firmware, or any combination thereof.

In response to receiving the request from the process manager 604, the process risk classifier 602 can create an initial process signature and an initial dependency mapping, as indicated by step C (612). One or more process signatures can be determined by the process risk classifier 602 for the process 606, such as one or more hashes of the process 606 (e.g., one or more hashes of the executable file(s)), hashes of other information associated with the process 606 (e.g., filename, timestamp, permissions, owner (e.g., users, namespaces)), and/or amounts of resources (e.g., CPU usage, memory usage, threads) that are requested and/or used by the process 606. For example, while requested and/or used resources may not be exactly identical across instances of the process 606, they can be baselined to provide an indication of anomalies. In some instances, multiple different functions can be used to hash the process 606 and/or associated information to establish a filter (e.g., Bloom filter) that can be used to identify changes in the process 606 from its initial installation.

The process risk classifier 602 can create a mapping of dependencies for the process 606, for example, using an execution order for the process 606, if such information exists and is available. Any of a variety of data structures can be used to model the depending mapping, such as a tree structure (e.g., B+ tree). A single data structure can be used across all processes/applications on the computer system 600, and/or separate data structures can be used for individual processes/applications. The dependency mapping information can be used to readily assess whether the process 606 extends along one or more paths that pose greater or lesser risks to the computer system 600. Dependency mappings can be continuously updated/refined as more processes are run, and/or variations of the same process are run (e.g. same process being run on different architectures and/or under different namespaces). Various machine learning algorithms can be used to implement a learning functionality/mechanism for updating/refining dependency mappings.

The computer system 600 can include one or more data repositories 614a-c (e.g., databases) that are used by the process risk classifier 602 to assess process risk. A first example data repository 614a can store historical resource usage information for the process 606 and other processes on the computer system 600. The second example data repository 614b can store process signatures for the process 606 and other processes on the computer system 600. The third example data repository 614c can store process mappings (e.g., dependency mappings) for the process 606 and other processes on the computer system 600. The process mappings that are stored may include a single process mapping for all processes on the system 600 and/or individual mappings for processes and/or applications.

The process risk classifier 602 can store the initial process signature(s) in the process signature data repository 614b in association with time information (e.g., timestamps, dates) when the process signature(s) were generated. The process risk classifier 602 can maintain a history of process signatures for the process 606 over time, which can be used to determine whether the process 606 has changed over time and to what extent.

The process risk classifier 602 can also store the dependency mapping in the process mappings data repository 614c. The dependency mapping may include time information as well (e.g., timestamps, dates) and different time-based versions of the dependency mapping so that changes in the process dependencies overtime can be determined.

As indicated by step D (616), the process risk classifier 602 can identify and log resource usage for the process 606. Such resource usage can include recent and current resource usage by the process 606 (e.g., current runtime resource usage, resource usage over a past period of time (e.g., past second, past minute), as well as resource usage requested by the process 606 (e.g., memory allocation requested, network traffic transmission requests). Usage of any of a variety of resources can be determined and tracked, such as processor/CPU utilization (e.g., processor cycles used), memory utilization (e.g., allocated memory), network traffic (e.g., traffic ingress and/or egress), energy consumption (e.g., energy consumption from processor operations, memory operations, and output operations), numbers of process threads, output device usage (e.g., display, speakers, haptic feedback devices), input device monitoring (e.g., keyboard, voice input, motion-based input), subsystem usage (e.g., CPU, graphics card usage, sensor usage), and/or other appropriate metrics. The process risk classifier 602 can log resource usage information for the process 606 in the historical resource usage data repository 614a in association with time information (e.g., timestamp, date), which can be used to identify changes in resource usage over time.

The process risk classifier 602 can determine an initial risk score for the process 606, as indicated by step E (618). The initial score can be determined based on a variety of factors, such as the process signatures, dependency mapping, and resource usage for the process 606, as determined in steps C and D. A risk score can be provided over a range of values (e.g., 0.0 - 6.0; 0 - 600; A-F) that, at one end, indicates a process with low/no risk (e.g., risk score of 0) and at the other end indicates a process with high risk (e.g., risk score 6.0 or 600). A low/no risk score may represent, for example, a process that does not pose any risk, such as the state of an operating system when it is initially installed on the computer system 600. Such a process may be permitted, by the process manager 604, to operate without limitation or isolation. In contrast, a high risk score may represent a process that poses great risk to the security of the computer system 600, such as a process that is infected with a virus or a malware process. The process manager 604 may take any of a variety of steps to protect itself against such processes running on the computer system 600, such as isolating the processes and/or prohibiting them from running at all.

The process risk classifier 602 can use any of a variety of techniques to determine the risk score. For example, the process risk classifier 602 can start with a default score for the process 606, such as a middle score (e.g., score of 50 for risk scores ranging from 0 - 600), and then increase or decrease the score as indicators of risk or safety (no risk) are presented through risk assessment information (e.g., signatures, mappings, resource usage) for the process 606. For example, a dependency mapping that shows the process 606 not going down any paths that present potential risks could decrease the risk score (e.g., drop the risk score from 50 to 40) and low resource usage could decrease the risk score further (e.g., decrease risk score from 40 to 20). In another example, dependency mappings showing the process 606 using paths with moderate risks could increase the score (e.g., increase from 50 to 55) and anomalous resource usage (e.g., requesting all of available of RAM) could increase the score as well (e.g., increase from 55 to 75).

A variety of additional and/or alternative factors can be used by the risk classifier 602 to determine the risk score. For example, risk can be inversely proportional to the number of times the process 606 has been executed, time window of executions, and/or the number of users who have executed the process 606. For example, if 600 people (large number of users) have run the process 606 every day for years (long time window and large number of executions) with little to no deviation in signature/characteristics/attributes, the process 606 can be determined to have a low risk score (e.g., risk score closer to 0 than 100) indicating that the process 606 is relatively safe.

The process risk classifier 602 can provide the risk score to the process manager 604, as indicated by step F (620), which can then manage the process based on the risk score, as indicated by step G (622). Such process management can include a variety of possibilities ranging from relinquishing the process for execution by the operating system (e.g., in a default, non-isolated namespace) to blocking execution of the process 606. As indicated by step H (624), the process manager 604 can provide a control signal (e.g., to the operating system, to the process 606) to manage the process 606, which can cause execution of the process 606 to proceed according to the management determined based on the risk score.

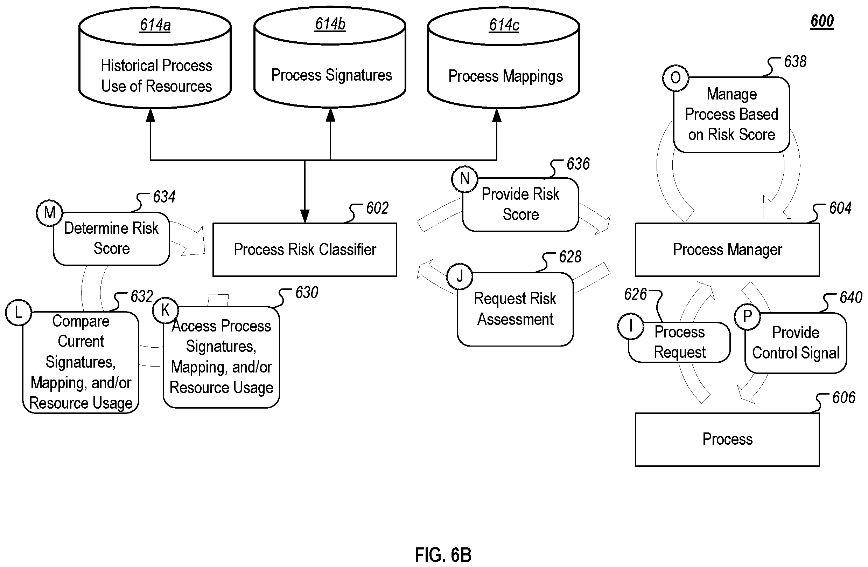

Referring to FIG. 6B, risk assessment of the process 606 at a later point in time after installation of the process 606 is depicted. The example steps that are depicted in FIG. 6B are, in some instances, similar to the steps that are depicted in FIG. 6A. At a time after installation of the process 606, the process can provide a request to the process manager 604, as indicated by step I (626). For example, the request can be made in any of a variety of contexts, such as a request for the process to run/be executed on the computer system 600 (e.g., in response to a user providing input to run the process 606 and/or an application of which the process 606 is a part) and/or a request for resources (e.g., additional memory allocation) that is made during runtime by the process 606.

Similar to step B, the process manager 604 can provide a request for a risk assessment of the process 606 in response to receiving the request, as indicated by step J (628). In response to receiving the request, the process risk classifier 602 can access signatures, mappings, and/or historical resource usage for the process 606 from the data repositories 614a-c, as indicated by step K (630). The process risk classifier 602 can then determine current signatures, mappings, and resource usage for the process 606, as described above with regard to steps C and D, and can compare that current information against the accessed/historical information for the process 606, as indicated in step L (632). Such comparisons can involve detecting differences between the current process information and the historical information, which can indicate increased and/or decreased risks for the process 606. The processor risk classifier 602 can use any of a variety of techniques to perform the comparison, such as filter techniques (e.g., Bloom filter), B+ trees, and/or binary diff operations to determine degrees of similarity between the current and previous values.

The process risk classifier 602 can use the comparisons and/or the current process information (e.g., signatures, mapping, resource usage) to determine a risk score for the process 606 at a current time (e.g., at or around the time the request was made to the process manager 604), as indicated by step M (634). The risk score can be determined in a similar manner to the initial risk score discussed above with regard to step E. For example, the process risk classifier 602 may start with a default score (e.g., mid-point score) and can increase/decrease the value based on indicators of risk and safety (no risk). For example, significant deviations between the current process information and the previous/historical information, such as one or more current signatures for the process 606 not matching one or more previous/historical signatures for the process 606, can indicate an increased risk for the process 606. Similarly, the current resource usage for the process 606 having increased over previous/historical resource usage (e.g., average resource usage over a recent window of time, average resource usage over all time) may also be an indicator of increased risk. Risk factors can additionally/alternatively be identified at step M without comparison to previous/historical information, similar to the techniques described above with regard to step E. Other factors can additionally and/or alternatively be used to determine risk scores, such as number of times the process 606 has been executed, time window of executions, and/or the number of users who have executed the process 606, as described above.

The process risk classifier 602 can provide the risk score to the process manager 604, as indicated by step N (636), which can manage the process based on the risk score, as indicated by step O (638), and provide a control signal, as indicated by step P (640). The steps N-P can be similar to the steps F-H described above.

Although not depicted in the specific example in FIGS. 6A-B, the process manger 604 can request risk assessments from the process risk classifier 602 on its own and without having first received a request from the process 606. For example, the process manager 604 can continuously make requests of the process risk classifier 602 during runtime of the process 606. In another example, the process manager 604 can periodically (e.g., daily, weekly, in response to particular events) make such requests to the process risk classifier 602. The process risk classifier 602 may be programmed to continuously and/or periodically determine risk scores for processes without being instructed to do so by the process manager 604 and, in response to a request, may provide a risk score that was most recently determined for the process at issue.

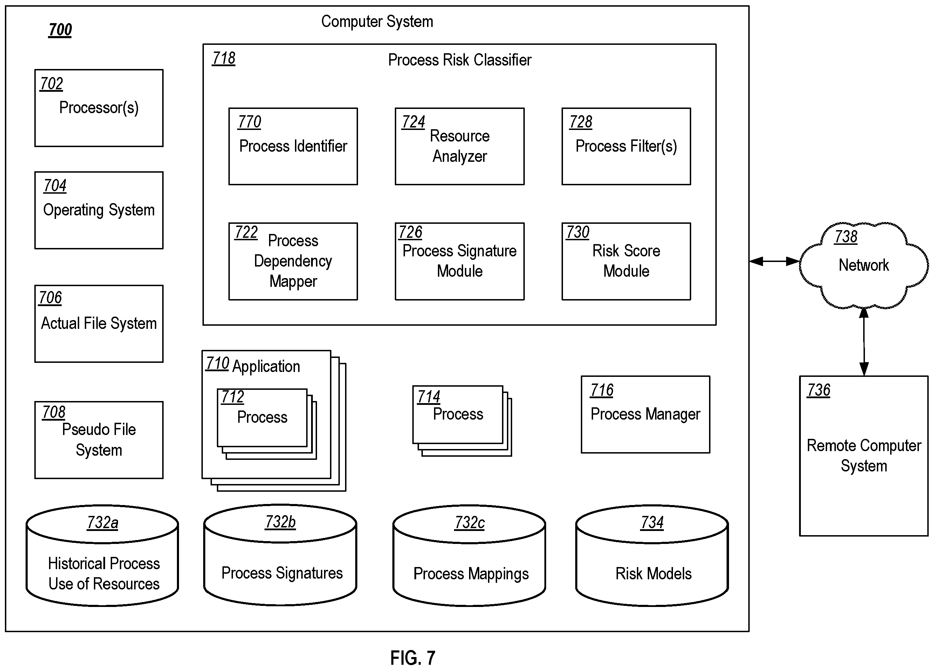

FIG. 7 depicts an example computer system 700 for assessing process risk. The example system 700 can be similar to the system 600 described above with regard to FIGS. 6A-B. For example, the computer system 700 can perform steps A-P and can be any of a variety of appropriate computer systems, such as individual computing devices (e.g., laptops, desktop computers, mobile computing devices, computer server) and/or networked computing devices (e.g., server system, cloud-based computer system, client-server system).

The computer system 700 includes one or more processors 702 and an operating system 704 for the computer system 700 that is run using the processors 702 to provide a computing environment on the computer system 700. The computer system 700 can include an actual file system 706 that can store files that are in a native namespace used by the processors 702 and the operating system 704. The computer system 700 can also include a pseudo file system 708 that can be in a separate namespace that is different and isolated from the native namespace for the computer system 700. The pseudo file system 708 can be used for running potentially risky processes so that, if they do include malicious and/or harmful code, it will not negatively impact the actual file system 706. The computer system 700 also includes a plurality of applications 710, that can each one or more processes 712, as well as standalone processes 714 (e.g., utility processes). The processes 712 and 714 can be similar to the process 606 described above with regard to FIGS. 6A-B.

A process manager 716 and a process risk classifier 718 are also included in the computer system 700. The process manager 716 and the process risk classifier 718 are similar to the process manager 604 and the process risk classifier 602, respectively, as described above with regard to FIGS. 6A-B. For example, the process manager 716 can provide requests for risk assessments for the processes 712/714 to the process risk classifier 718, which can determine and provide current risk scores for the processes 712/714, and the process manager 716 can manage the processes 712/714 based on the risk scores. For instance, the process manager 716 can use the risk scores to determine whether to use the actual file system 706 or the pseudo file system 708 for execution of the processes 712/714.

The process risk classifier 718 includes a process identifier 720 that is programmed to identify processes (e.g., identify instantiated processes that are running on the computer system 700) that are identified in requests for risk assessments and to identify corresponding process information from data repositories 732a-c, which can be similar to the repositories 614a-c, respectively.

The process risk classifier 718 can include a process dependency mapper 722 that can map dependencies for the processes 712/714, which can be stored in the process mappings data repository 732c. The process dependency mapper 722 can perform operations similar to those discussed above with regard to steps C, K, and L.

The process risk classifier 718 additionally includes a resource analyzer 724 that can determine resource usage (current and/or requested) by the processes 712/714, and can determine changes in resource usage over time through the use of the information in the historical resource data repository 732a. The resource analyzer 724 can perform operations similar to those discussed above with steps D, K, and L. The resource analyzer 724 can additionally monitor resource usage by the processes 712/714 and can log the information in the historical resource usage data repository 732a, which can be used to detect changes in resource usage overtime.

A process signature module 726 can also be included in the process risk classifier 718. The process signature module 726 can determine signatures for the processes 712/714, such as using any of a variety of hash functions on the executables for the processes 712/714, on information associated with the processes 712/714 (e.g., filename, owner, permissions, timestamps), and/or information associated with the applications 710. The process signature module 726 can perform operations similar to those described above with regard to C, K, and L.

The process risk classifier 718 can additionally include one or more process filters 728 that can be programmed to be applied to determine whether the processes 712/714 have changed over time from the previous instances (e.g., initial installation, earlier instantiations of the processes 712/714). For example, the process filters 728 can include B+ trees, binary diff operations, and/or other appropriate techniques to provide information identifying relative degrees of similarity that can be applied to process signatures to determine whether the processes 712/714 have changed from an earlier form.

The process risk classifier 718 further includes a risk score module 730 that is programmed to determine risk scores for the processes 712/714 based on the any of a variety of factors, such as those identified by one or more of the components 720-728 and/or based on information stored in the data repositories 732a-c. The risk score module 730 can perform operations similar to those described above with regard to steps E and M. The risk score module 730 can additionally determine risk scores based on risk models that are stored in a risk model repository 734. Risk models can include a variety of information to assist in determining risk scores, such as weighting information that identifies weights (e.g., score increase amount for particular factors, score decrease amount of other particular factors) that should be applied based on various factors.

The risk models in the repository 734 can be updated and refined over time, for example, based on the retrospective accuracy of previous risk scores. For example, if a particular process received a low risk score but was found to have compromised security on the computer system 700 (e.g., transmitting sensitive information to another computing device), then the computer system 700 can reexamine and revise models that were used to determine the incorrectly low risk score for the particular process. Any of a variety of mechanisms can be used to determine such models and model revisions, such as machine learning algorithms (e.g., neural networks, decision trees) that can take a variety of disparate factors to determine corresponding models. The risk score module 730 can periodically reevaluate and update the risk models 734 based on evaluation of the determined risk scores and the actual risks that were presented by the processes 712/714.

The risk score module 730 can additionally leverage and incorporate models that are used by other computer systems. For example, the risk score module 730 can obtain risk models from other computer systems, such as the remote computer system 736 over a network 738 (e.g., the internet, wireless networks, wired networks, or any combination thereof), which can be incorporated, in whole or in part, into the risk model repository 734. Additionally and/or alternatively, the risk score module 730 can provide information to the remote computer system 736 regarding determined risk scores and the corresponding accuracy of the risk scores, and the remote computer system 736 can combine that information with similar information from multiple other computer systems to determine risk models that leverage data from a broader group of computer systems. The remote computer system 736 can then provide such risk models back to the computer system 700, which can use and incorporate them into the risk model repository 734. The information shared with the remote computer system 736 may be anonymized by the computer system 700 and may be provided only with user consent so as to protect user privacy. Additionally, the remote computer system 736 may be authenticated and certified by the computer system 700 as a trusted source for risk model information before the risk model information is incorporated into and used as part of the risk model repository 734.

Although one of each of the systems 700 and 736 is described, multiples of each of the systems 700 and 736 are possible. Additionally, the modules and components described for the system 700 can be implemented in any of a variety of ways, such as through software (e.g., applications, operating system process), hardware (e.g., ASIC), firmware, or any combination thereof.

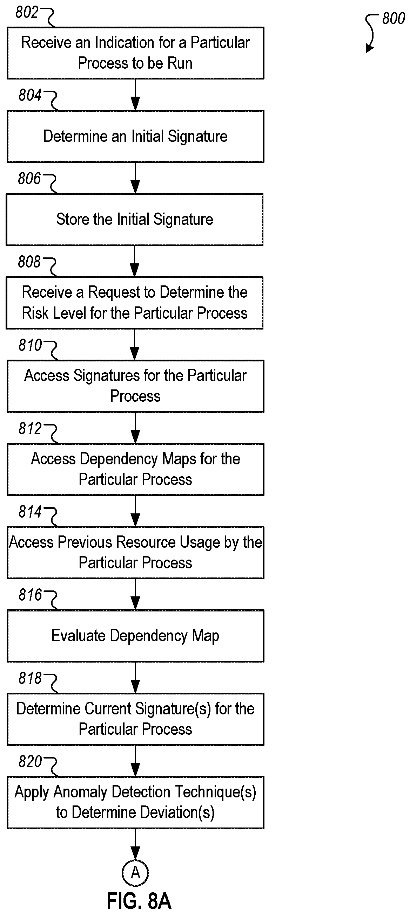

FIGS. 8A-B are flowcharts of an example technique 800 for assessing risks posed by computer processes. The example technique 800 can be performed by any of a variety of appropriate computer systems and/or computing devices, such as the computer system 600 and/or the computer system 700.

Referring to FIG. 8A, a request is received for a particular process to be run (802). For example, the process risk classifier 718 can receive an indication that one or more of the processes 712/714 has been requested to be run (e.g., requested by a user, requested by another process, requested following installation/update). The indication can prompt the process risk classifier 718 to determine baseline information for the processes to be run, which can be used to assess changing risks posed by the processes over time (e.g., as a result of changes to the processes over time). Determining such baseline information can include determining one or more initial signatures for the recently installed processes (804), storing the signature information (806), mapping and storing dependencies information of the processes, and determining and storing initial resource usage information for the processes.

After establishing baseline information, a request to determine the risk level of the particular process can be received (808). For example, the process risk classifier 718 can receive a request from the process manager 716. In response to receiving the request, previously determined signatures for the particular process can be accessed (810), dependency mappings for the particular process can be accessed (812), and previous/historical resource usage information for the particular process can be accessed (814). For example, the resource analyzer 724 can access historical resource usage from the repository 732a, the process signature module 726 can access signatures for the process from the repository 732b, and the process dependency mapper 72 can access process mappings from the repository 732c. Using this accessed information, the dependency map can be evaluated (816). For example, the process dependency mapper 722 can examine the branches of the map that are occupied by the particular process and/or can identify changes in the branches of the map for the particular process to identify risk factors for the particular process.

One or more current signatures for the particular process can be determined (818). One or more anomaly detection techniques can be performed to determine differences/deviations between stored and observed information for the particular process (820). For example, differences between the current/observed signatures/characteristics/attributes and the stored signatures/characteristics/attributes can be determined. For instance, the process signature module 726 can determine current/observed signatures for a process and can determine whether anomalies exist in the current process based, for example, on differences between the current/observed and stored signatures, such as through use of the process filters 728, to identify risk factors for the particular process.

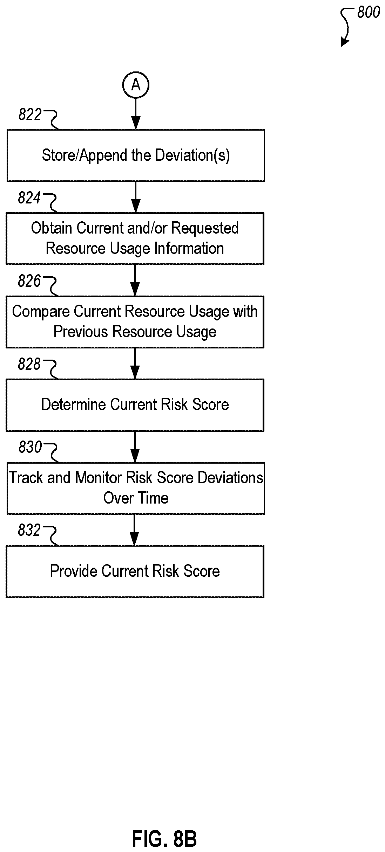

Referring to FIG. 8B, deviations between stored and observed information for the particular process can be stored/appended (822). For example, the process signature module 726 can store differences between the current/observed signature/characteristics/attributes and the stored signature/characteristics/attributes in the process signatures repository 732b. Current and/or requested resource usage information can be obtained (824) and compared against previous resource usage information (826). For example, the resource analyzer 724 can obtain current and/or requested resource usage information for the processes 712/714, and can compare it against historical resource usage information from the historical resource usage repository 732a to identify one or more risk factors for the processes 712/714.

Current risk scores can be determined (828) and deviations in risk scores can be continuously tracked and monitored over time (830). For example, the system administration process or similar process can continuously monitor risk scores for deviations that may indicate risks associated with the current/observed form of the particular process. The current risk scores and/or deviations in risk scores can be provided (832). For example, a current risk score for a particular process can be determined by the risk score module 730 based on any number of factors, such as the current dependency map for the particular process, a change in the dependency map for the particular process, current signatures for the particular process, changes in the signatures for the particular process, current and/or requested resource usage for the particular process, changes in the resources used by the particular process, or any combination thereof. The risk score module 730 can provide the determined risk score to other components that may use the risk score, such as the process manager 716.

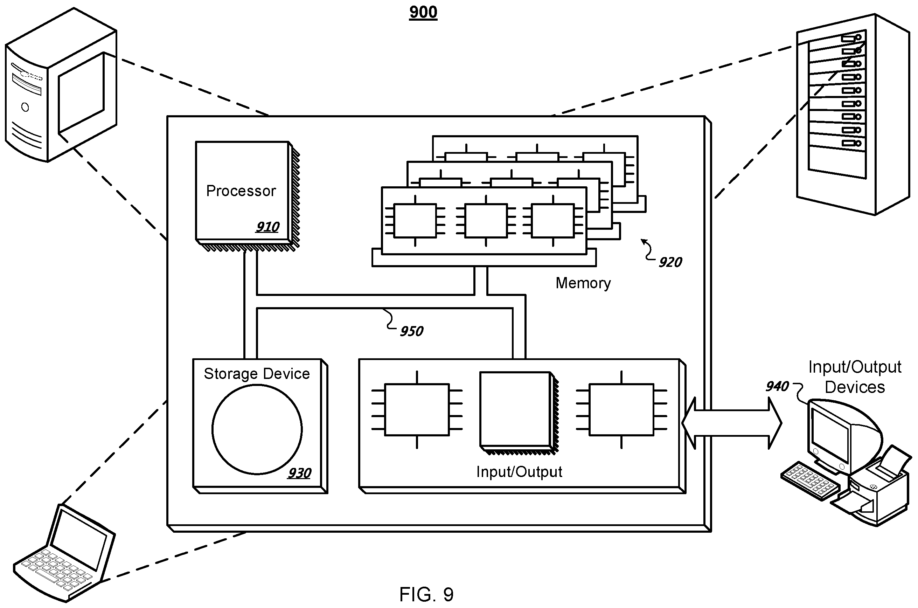

FIG. 9 illustrates a schematic diagram of an exemplary generic computer system. The system 900 can be used for the operations described in association with the processes 500 and 800 according to some implementations.

The system 900 includes a processor 910, a memory 920, a storage device 930, and an input/output device 940. Each of the components 910, 920, 930, and 920 are interconnected using a system bus 950. The processor 910 is capable of processing instructions for execution within the system 900. In one implementation, the processor 910 is a single-threaded processor. In another implementation, the processor 910 is a multi-threaded processor. The processor 910 is capable of processing instructions stored in the memory 920 or on the storage device 930 to display graphical information for a user interface on the input/output device 940.

The memory 920 stores information within the system 900. In one implementation, the memory 920 is a computer-readable medium. In one implementation, the memory 920 is a volatile memory unit. In another implementation, the memory 920 is a non-volatile memory unit.

The storage device 930 is capable of providing mass storage for the system 900. In one implementation, the storage device 930 is a computer-readable medium. In various different implementations, the storage device 930 may be a floppy disk device, a hard disk device, an optical disk device, or a tape device.

The input/output device 940 provides input/output operations for the system 900. In one implementation, the input/output device 940 includes a keyboard and/or pointing device. In another implementation, the input/output device 940 includes a display unit for displaying graphical user interfaces.

Embodiments of the subject matter, the functional operations and the processes described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible nonvolatile program carrier for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. For example, while a client application is described as accessing the delegate(s), in other implementations the delegate(s) may be employed by other applications implemented by one or more processors, such as an application executing on one or more servers. In addition, the logic flows depicted in the figures do not require the particular order shown, or sequential order, to achieve desirable results. In addition, other actions may be provided, or actions may be eliminated, from the described flows, and other components may be added to, or removed from, the described systems. Accordingly, other implementations are within the scope of the following claims.

## Claims

1. A computer-implemented method (200) comprising:
receiving, from each of one or more client devices (105, 105a-105e), data (130, 135) indicating resources allocated upon execution of each of one or more processes;
receiving, from each of the one or more client devices, data (120, 125) indicating a configuration of the client device;
receiving, from each of the one or more client devices, user selection data (137d, 137e, 139d, 139e) indicating whether a user selected that each of the one or more processes is safe or not safe to execute;
based on the resources allocated upon execution of each of the one or more processes, the configuration of each client device, and the user selection data, determining, for each of the one or more processes, a risk score that reflects a likelihood that the process is a malicious process;
based on the risk score, identifying a particular process;
performing additional processing on the particular process; and
based on the additional processing, determining an updated risk score for the particular process.

2. The method of claim 1, wherein the resources allocated upon execution of each of the one or more processes comprises:
an amount of memory;
an amount of processor time;
an amount of power; and
network connections.

3. The method of claim 1, wherein the configuration of the client device comprises:
a type and speed of each processor;
a type and size of memory;
a type and size of a hard drive;
networking devices; and
output devices.

4. The method of claim 1, wherein determining, for each of the one or more processes, the risk score comprises:
based on the configuration of the client device, determining resources that are available for allocation upon execution of the process; and
determining the risk score based on a ratio of an amount of the resources allocated upon execution of the process to an amount of the resources that are available for allocation upon execution of the process.

5. The method of claim 1, wherein determining, for each of the one or more processes, the risk score comprises:
determining a number of the one or more client devices from which the data indicating the resources allocated upon execution of each of one or more processes is received; and
determining the risk score based on the number of the one or more client devices from which the data indicating the resources allocated upon execution of each of one or more processes is received.

6. The method of claim 1, wherein performing additional processing on the particular process comprises:
executing the particular process;
after executing the particular process, determining an amount of resources requested by the particular process; and
terminating the particular process.

7. The method of claim 1, comprising:
determining that the updated risk score satisfies a threshold;
based on determining that the updated risk score satisfies the threshold, adding the particular process to a blacklist; and
providing, to each of the one or more client devices, the blacklist.

8. The method of claim 1, comprising:
determining that the updated risk score does not satisfy a first threshold;
determining that the updated risk score satisfies a second threshold;
based on determining that the updated risk score does not satisfy the first threshold and does satisfy a second threshold, adding the particular process to a whitelist; and
providing, to each of the one or more client devices, the whitelist.

9. The method of claim 1, wherein identifying the particular process comprises:
identifying a process with a highest risk score.

10. The method of claim 1, comprising:
receiving, from each of the one or more client devices, data indicating resources that are available for allocation upon execution of each of the one or more processes.

11. The method of claim 1, wherein the one or more client devices are comprised of client devices in one enterprise.

12. A non-transitory computer-readable medium storing software comprising instructions executable by one or more computers which, upon such execution, cause the one or more computers to perform the method of any of the preceding claims.

13. A system (110; 300; 320; 322; 324; 350) comprising:
one or more computers and one or more storage devices storing instructions that are operable, when executed by the one or more computers, to cause the one or more computers to perform operations comprising:
receiving, from each of one or more client devices (105, 105a-105e), data (130, 135) indicating resources allocated upon execution of each of one or more processes;
receiving, from each of the one or more client devices, data (120, 125) indicating a configuration of the client device;
receiving, from each of the one or more client devices, user selection data (137d, 137e, 139d, 139e) indicating whether a user selected that each of the one or more processes is safe or not safe to execute;
based on the resources allocated upon execution of each of the one or more processes, the configuration of each client device, and the user selection data, determining, for each of the one or more processes, a risk score that reflects a likelihood that the process is a malicious process;
based on the risk score, identifying a particular process;
performing additional processing on the particular process; and
based on the additional processing, determining an updated risk score for the particular process.

14. The system of claim 13, wherein the instructions are operable, when executed by the one or more computers, to cause the one or more computers to perform the method defined in one or more of claims 2 to 11.

## Patentansprüche

1. Computerimplementiertes Verfahren (200), umfassend:
Empfangen von Daten (130, 135) von jeder von einer oder mehreren Clientvorrichtungen (105, 105a bis 105e), die Ressourcen angeben, die bei der Ausführung von einem oder mehreren Prozessen zugewiesen werden;
Empfangen von Daten (120, 125) von jeder der einen oder mehreren Clientvorrichtungen, die eine Konfiguration der Clientvorrichtung angeben;
Empfangen von Benutzerauswahldaten (137d, 137e, 139d, 139e) von jeder der einen oder mehreren Clientvorrichtungen, die anzeigen, ob ein Benutzer ausgewählt hat, dass jeder des einen oder der mehreren Prozesse sicher oder nicht sicher auszuführen ist;
Bestimmen einer Risikoeinstufung, die die Wahrscheinlichkeit widerspiegelt, dass der Prozess ein bösartiger Prozess ist, für jeden der einen oder mehreren Prozesse basierend auf den bei Ausführung jedes der einen oder mehreren Prozesse zugeteilten Ressourcen, der Konfiguration jeder Clientvorrichtung und der Benutzerauswahldaten;
Identifizierung eines bestimmten Prozesses basierend auf der Risikoeinstufung;
Durchführen einer zusätzlichen Verarbeitung für den bestimmten Prozess; und
Bestimmen einer aktualisierten Risikoeinstufung für den bestimmten Prozess basierend auf der zusätzlichen Verarbeitung.

2. Verfahren nach Anspruch 1, wobei die bei Ausführung jedes der einen oder mehreren Prozesse zugeteilten Ressourcen umfassen:
eine Menge Speicher;
eine Menge Prozessorzeit;
eine Menge Leistung; und
Netzwerkverbindungen.

3. Verfahren nach Anspruch 1, wobei die Konfiguration der Clientvorrichtung umfasst:
Typ und Geschwindigkeit jedes Prozessors;
Art und Größe des Speichers;
Typ und Größe einer Festplatte;
Netzwerkgeräte; und
Ausgabegeräte.

4. Verfahren nach Anspruch 1, wobei das Bestimmen der Risikoeinstufung für jeden des einen oder der mehreren Prozesse umfasst:
basierend auf der Konfiguration der Clientvorrichtung, Bestimmen von Ressourcen, die bei der Ausführung des Prozesses für die Zuteilung verfügbar sind; und
Bestimmen der Risikoeinstufung basierend auf einem Verhältnis einer Menge der bei Ausführung des Prozesses zugeteilten Ressourcen zu einer Menge der für die Zuteilung bei der Ausführung des Prozesses verfügbaren Ressourcen.

5. Verfahren nach Anspruch 1, wobei das Bestimmen der Risikoeinstufung für jeden des einen oder der mehreren Prozesse umfasst:
Bestimmen einer Anzahl der einen oder mehreren Clientvorrichtungen, von denen die Daten empfangen werden, die die bei Ausführung eines oder mehrerer Prozesse zugeteilten Ressourcen angeben; und
Bestimmen der Risikoeinstufung basierend auf der Anzahl der einen oder mehreren Clientvorrichtungen, von denen die Daten empfangen werden, die die bei Ausführung eines oder mehrerer Prozesse zugeteilten Ressourcen angeben.

6. Verfahren nach Anspruch 1, wobei das Durchführen einer zusätzlichen Verarbeitung für den bestimmten Prozess umfasst:
Ausführen des jeweiligen Prozesses;
nach dem Ausführen des bestimmten Prozesses, Bestimmen einer von dem bestimmten Prozess angeforderten Menge an Ressourcen; und
Beenden des jeweiligen Prozesses.

7. Verfahren nach Anspruch 1, umfassend:
Bestimmen, dass die aktualisierte Risikoeinstufung einen Schwellenwert erfüllt;
basierend auf der Feststellung, dass die aktualisierte Risikoeinstufung den Schwellenwert erfüllt, Hinzufügen des bestimmten Prozesses zu einer schwarzen Liste; und
Bereitstellen der Blacklist für jede der einen oder mehreren der Clientvorrichtungen.

8. Verfahren nach Anspruch 1, umfassend:
Bestimmen, dass die aktualisierte Risikoeinstufung einen ersten Schwellenwert nicht erfüllt;
Bestimmen, dass die aktualisierte Risikoeinstufung einen zweiten Schwellenwert erfüllt;
basierend auf der Feststellung, dass die aktualisierte Risikoeinstufung den ersten Schwellenwert nicht erfüllt und einen zweiten Schwellenwert erfüllt, Hinzufügen des bestimmten Prozesses zu einer Whitelist; und
Bereitstellen der Whitelist für jede der einen oder mehrere der Clientvorrichtungen.

9. Verfahren nach Anspruch 1, wobei das Identifizieren des bestimmten Prozesses umfasst:
Identifizieren eines Prozesses mit einer höchsten Risikoeinstufung.

10. Verfahren nach Anspruch 1, umfassend:
Empfangen von Daten von jeder der einen oder mehreren Clientvorrichtungen, die Ressourcen angeben, die bei der Ausführung jedes des einen oder der mehreren Prozesse zur Zuteilung verfügbar sind.

11. Verfahren nach Anspruch 1, wobei die eine oder die mehreren der Clientvorrichtungen Clientvorrichtungen in einem Unternehmen umfassen.

12. Nichtflüchtiges computerlesbares Medium, das Software speichert, die Anweisungen umfasst, die von einem oder mehreren Computern ausführbar sind, die bei einer solchen Ausführung bewirken, dass der eine oder die mehreren Computer das Verfahren nach einem der vorhergehenden Ansprüche ausführen.

13. System (110; 300; 320; 322; 324; 350) umfassend:
einen oder mehrere Computer und eine oder mehrere Speichervorrichtungen, die Anweisungen speichern, die betriebsfähig sind, wenn sie von dem einen oder den mehreren Computern ausgeführt werden, um zu veranlassen, dass der eine oder die mehreren Computer Operationen ausführen, die Folgendes umfassen:
Empfangen von Daten (130, 135) von jeder von einer oder mehreren Clientvorrichtungen (105, 105a bis 105e), die Ressourcen angeben, die bei der Ausführung von einem oder mehreren Prozessen zugewiesen werden;
Empfangen von Daten (120, 125) von einer oder mehreren Clientvorrichtungen, die eine Konfiguration der Clientvorrichtung angeben;
Empfangen von Benutzerauswahldaten (137d, 137e, 139d, 139e) von jeder der einen oder mehreren Clientvorrichtungen, die anzeigen, ob ein Benutzer ausgewählt hat, dass jeder des einen oder der mehreren Prozesse sicher oder nicht sicher auszuführen ist;
Bestimmen einer Risikoeinstufung, die die Wahrscheinlichkeit widerspiegelt, dass der Prozess ein bösartiger Prozess ist, für jeden der einen oder mehreren Prozesse basierend auf den bei Ausführung jedes der einen oder mehreren Prozesse zugeteilten Ressourcen, der Konfiguration jeder Clientvorrichtung und der Benutzerauswahldaten;
Identifizierung eines bestimmten Prozesses basierend auf der Risikoeinstufung;
Durchführen einer zusätzlichen Verarbeitung für den bestimmten Prozess; und
Bestimmen einer aktualisierten Risikoeinstufung für den bestimmten Prozess basierend auf der zusätzlichen Verarbeitung.

14. System nach Anspruch 13, wobei die Anweisungen ausführbar sind, wenn sie von dem einen oder den mehreren Computern ausgeführt werden, den einen oder die mehreren Computer dazu zu veranlassen, das in einem oder mehreren der Ansprüche 2 bis 11 definierte Verfahren auszuführen.

## Revendications

1. Procédé mis en oeuvre par ordinateur (200) comprenant les étapes consistant à :
recevoir, en provenance de chacun d'un ou de plusieurs dispositifs clients (105, 105a à 105e), des données (130, 135) indiquant les ressources allouées lors de l'exécution de chacun d'un ou plusieurs processus ;
recevoir, en provenance de chacun desdits un ou plusieurs dispositifs clients, des données (120, 125) indiquant une configuration du dispositif client ;
recevoir, en provenance de chacun desdits un ou plusieurs dispositifs clients, des données de sélection d'utilisateur (137d, 137e, 139d, 139e) indiquant si un utilisateur a sélectionné si chacun desdits un ou plusieurs processus est sûr ou non à exécuter ;
sur la base des ressources allouées lors de l'exécution de chacun desdits un ou plusieurs processus, de la configuration de chaque dispositif client et des données de sélection de l'utilisateur, déterminer, pour chacun desdits un ou plusieurs processus, un score de risque reflétant une probabilité que le processus soit un processus malveillant ;
sur la base du score de risque, identifier un processus particulier ;
effectuer un traitement supplémentaire sur le processus particulier ; et
sur la base du traitement supplémentaire, déterminer un score de risque mis à jour pour le processus particulier.

2. Procédé selon la revendication 1, dans lequel les ressources allouées lors de l'exécution de chacun desdits un ou plusieurs processus comprennent :
une quantité de mémoire ;
une quantité de temps processeur ;
une quantité de puissance ; et
les connexions de réseau.

3. Procédé selon la revendication 1, dans lequel la configuration du dispositif client comprend :
un type et une vitesse de chaque processeur ;
un type et une taille de mémoire ;
un type et une taille de disque dur ;
des dispositifs de mise en réseau ; et
des dispositifs de sortie.

4. Procédé selon la revendication 1, dans lequel la détermination du score de risque pour chacun desdits un ou plusieurs processus comprend les étapes consistant à :
sur la base de la configuration du dispositif client, déterminer les ressources disponibles pour une allocation lors de l'exécution du processus ; et
déterminer le score de risque sur la base d'un rapport entre un montant des ressources allouées lors de l'exécution du processus et un montant des ressources disponibles pour l'attribution lors de l'exécution du processus.

5. **Procédé selon la revendication 1, dans lequel la détermination du score de risque pour chacun desdits un ou plusieurs processus comprend les étapes consistant à :**
**déterminer un nombre desdits un ou plusieurs dispositifs clients en provenance desquels les données indiquant les ressources allouées lors de l'exécution de chacun desdits un ou plusieurs processus sont reçues ; et**
**déterminer le score de risque sur la base du nombre desdits un ou plusieurs dispositifs clients en provenance desquels les données indiquant les ressources allouées lors de l'exécution de chacun desdits un ou de plusieurs processus sont reçues.**

6. Procédé selon la revendication 1, dans lequel l'exécution d'un traitement supplémentaire sur le processus particulier comprend les étapes consistant à :
exécuter le processus particulier ;
après avoir exécuté le processus particulier, déterminer une quantité de ressources demandée par le processus particulier ; et
mettre fin au processus particulier.

7. Procédé selon la revendication 1, comprenant les étapes consistant à :
déterminer que le score de risque mis à jour atteint un seuil ;
sur la base de la détermination du fait que le score de risque mis à jour atteint le seuil, ajouter le processus particulier à une liste noire ; et
fournir la liste noire à chacun desdits un ou plusieurs périphériques clients.

8. Procédé selon la revendication 1, comprenant les étapes consistant à :
déterminer que le score de risque mis à jour n'atteint pas un premier seuil ;
déterminer que le score de risque mis à jour atteint un second seuil ;
sur la base de la détermination du fait que le score de risque mis à jour n'atteint pas le premier seuil et atteint un second seuil, ajouter le processus particulier à une liste blanche ; et
fournir la liste blanche à chacun desdits un ou plusieurs périphériques clients.

9. Procédé selon la revendication 1, dans lequel l'identification du processus particulier comprend : l'identification d'un processus avec le score de risque le plus élevé.

10. Procédé selon la revendication 1, comprenant l'étape consistant à :
recevoir, en provenance de chacun desdits un ou plusieurs dispositifs clients, des données indiquant les ressources qui sont disponibles pour être attribuées lors de l'exécution de chacun desdits un ou plusieurs processus.

11. Procédé selon la revendication 1, dans lequel lesdits un ou plusieurs périphériques clients sont composés de périphériques clients dans une entreprise.

12. Logiciel de stockage de support lisible par ordinateur non transitoire comprenant des instructions exécutables par un ou plusieurs ordinateurs qui, lors de cette exécution, amènent lesdits un ou plusieurs ordinateurs à réaliser le procédé selon l'une quelconque des revendications précédentes.

13. Système (110 ; 300 ; 320 ; 322 ; 324 ; 350) comprenant :
un ou plusieurs ordinateurs et un ou plusieurs dispositifs de stockage stockant des instructions pouvant être mises en oeuvre, lorsqu'elles sont exécutées par lesdits un ou plusieurs ordinateurs, pour amener lesdits un ou plusieurs ordinateurs à effectuer des opérations comprenant les étapes consistant à :
recevoir, en provenance de chacun desdits un ou plusieurs dispositifs clients (105, 105a à 105e), des données (130, 135) indiquant les ressources allouées lors de l'exécution de chacun desdits un ou plusieurs processus ;
recevoir, en provenance de chacun desdits un ou plusieurs dispositifs clients,
des données (120, 125) indiquant une configuration du dispositif client ;
recevoir, en provenance de chacun desdits un ou plusieurs dispositifs clients, des données de sélection d'utilisateur (137d, 137e, 139d, 139e) indiquant si un utilisateur a sélectionné si chacun desdits un ou plusieurs processus est sûr ou non à exécuter ;
sur la base des ressources allouées lors de l'exécution de chacun desdits un ou plusieurs processus, de la configuration de chaque dispositif client et des données de sélection de l'utilisateur, déterminer, pour chacun desdits un ou plusieurs processus, un score de risque reflétant la probabilité que le processus soit un processus malveillant ;
sur la base du score de risque, identifier un processus particulier ;
effectuer un traitement supplémentaire sur le processus particulier ; et
sur la base du traitement supplémentaire, déterminer un score de risque mis à jour pour le processus particulier.

14. Système selon la revendication 13, dans lequel les instructions sont utilisables, lorsqu'elles sont exécutées par lesdits un ou plusieurs ordinateurs, pour amener lesdits un ou plusieurs ordinateurs à réaliser le procédé défini selon une ou plusieurs des revendications 2 à 11.
